# EUROPÄISCHE PATENTSCHRIFT

(11) **EP 3 310 545 B1**
(45) Veröffentlichungstag und Bekanntmachung des Hinweises auf die Patenterteilung: **26.07.2023**
(21) Anmeldenummer: 16729854.6
(22) Anmeldetag: 09.06.2016
(51) Int. Cl.: B29C 37/00, B29C 43/02, B29C 45/00, B29C 70/68, B29C 45/14, B29C 33/12, B32B 5/00, B32B 27/00, B29C 59/02

(54) **VERFAHREN ZUM HERSTELLEN EINES KUNSTSTOFFFORMKÖRPERS, KUNSTSTOFFFORMKÖRPER UND FORMWERKZEUG**
METHOD FOR PRODUCING A PLASTIC MOLDED ARTICLE, PLASTIC MOLDED ARTICLE AND MOLD
PROCÉDÉ DE FABRICATION D'UN CORPS DE MOULE EN MATIÈRE PLASTIQUE, CORPS DE MOULE EN MATIÈRE PLASTIQUE ET OUTIL DE MOULAGE

(30) Priorität: 16.06.2015 DE 102015109597
(43) Veröffentlichungstag der Anmeldung: 25.04.2018
(73) Patentinhaber: Leonhard Kurz Stiftung & Co. KG, 90763 Fürth (DE); Bond Laminates GmbH, 59929 Brilon (DE)
(72) Erfinder: FUCHS, Michael, 90768 Fürth (DE); SCHUMACHER, Christian, 90768 Fürth (DE); HAHN, Martin, 91567 Herrieden (DE); WOLF, Felix, 90574 Roßtal (DE); FALGNER, Steffen, 86931 Prittriching (DE); KOMENDA, Thomas, 90522 Oberasbach (DE); DENTEL, Andy, 33104 Paderborn (DE); BAUDER, Jochen, 39050 Deutschnofen (DE); RIEB, Arthur, 59929 Brilon (DE)
(74) Vertreter: Louis Pöhlau Lohrentz
(86) Internationale Anmeldenummer: PCT/EP2016/063142
(87) Internationale Veröffentlichungsnummer: WO 2016/202672

(56) Entgegenhaltungen:
- EP-A1- 2 740 579
- DE-A1- 4 120 133
- DE-A1- 19 731 903
- DE-A1-102009 016 177
- DE-A1-102010 063 751
- DE-A1-102013 004 962
- US-A1- 2008 143 016
- US-A1- 2008 211 137

## Beschreibung

Die Erfindung betrifft ein Verfahren zum Herstellen eines Kunststoffformkörpers und einen derart erhältlichen Kunststoffformkörper.

Faserverbundkunststoffe sind vielfältig und flexibel einsetzbar und können durch die Wahl der Faserart und -struktur sowie des Matrixwerkstoffs in ihren mechanischen Eigenschaften optimal an für ein jeweiliges Bauteil auftretende Lastfälle angepasst werden und ermöglichen dabei zumeist gegenüber vielen anderen Werkstoffen gleicher Leistungsfähigkeit dünnere und/oder leichtere Bauteile.

In vielen Fällen weisen Faserverbundkunststoffe jedoch eine optisch wenig ansprechende und/oder für bestimmte Anwendungsfälle nicht ausreichend mechanisch und/oder chemisch beständige Oberflächenqualität auf. In Kantenbereichen weisen Faserverbundkunststoffbauteile nach der Formgebung regelmäßig noch offene Kanten und/oder überstehende Fasern auf. Meist werden sie daher für nicht sichtbare Strukturbauteile verwendet oder müssen weiteren aufwändigen Bearbeitungsschritten unterzogen werden.

Bekannte Verfahren zur Beschichtung der Oberflächen von Faserverbundbauteilen schließen meist mehrfache Füll- und Lackierschritte ein und sind daher aufwändig und teuer in der Durchführung.

DE 10 2013 004 962 A1 beschreibt ein Verfahren und einen Vorformling zur Herstellung eines aus einem faserverstärkten Kunststoffmaterial gebildeten Bauteils.

DE 19731903 A1 offenbart ein Verfahren zur Herstellung eines Dachmoduls oder Schiebedaches für Fahrzeuge.

DE 10 2009 016 177 A1 beschreibt ein Verbundbauteil insbesondere für Innenraum-Verkleidungselemente von Kraftfahrzeugen und ein Verfahren zu dessen Herstellung.

DE 10 2010 063 751 A1 offenbart ein Verfahren zur Herstellung von oberflächenendbearbeiteten Leichtbauteilen mit hohem Naturfaseranteil und integrierten Befestigungselementen.

US 2008 211137 A1 beschreibt ein Verfahren und ein Werkzeug zur Herstellung eines Kunststoffbauteils mit einer Dekorschicht, einer Stützschicht und einem zusätzlichen angespritzten Teil.

US 2008 143016 A1 offenbart eine Vorrichtung zur Zuführung eines Films in ein Spritzgusswerkzeug.

EP 2 740 579 A1 beschreibt ein Verfahren zur Herstellung eines Kunststoffbauteils und ein Spritzgießwerkzeug zur Durchführung dieses Verfahrens.

DE 4120133 A1 offenbart ein Bauteil mit einem Faserverbundwerkstoff sowie ein Verfahren zur Herstellung eines solchen Bauteils.

Aufgabe der vorliegenden Erfindung ist es, ein verbessertes Verfahren zum Herstellen beschichteter Kunststoffformkörper und einen solchen verbesserten Kunststoffformkörper bereitzustellen.

Diese Aufgabe wird durch ein Verfahren nach Anspruch 1 und einen Kunststoffformkörper nach Anspruch 10 gelöst.

Zur Klarstellung sei angemerkt, dass alle aufgeführten, allgemeinen oder in Vorzugsbereichen genannten Definitionen und Parameter in beliebigen Kombinationen umfasst sind.

Unter Dekorfolie wird ein aus wenigstens einer Lackschicht bestehendes Trockenlacksystem verstanden, das zum Zwecke der prozessintegrierten Oberflächenbeschichtung des herzustellenden Kunststoffformkörpers zuvor auf Trägerlage appliziert ist. Das Trockenlacksystem ist dabei unter Einwirken eines spezifischen Druck-, Temperatur- und Zeitprofils in der Lage, adhäsiv und/oder unter Stoffschluss eine haftfeste Verbindung zum Kunststoffformkörper einzugehen und diesen somit mit dekorativen und/oder funktionalen Oberflächenmerkmalen vollflächig oder zumindest in ausgewählten Bereichen zu beschichten. Der Begriff Dekorfolie umfasst in der vorliegenden Erfindung demzufolge sowohl die Ausprägung der wenigstens einen Trockenlackschicht als sogenanntes Transfersystem, wobei eine Trägerlage von einer auf das Kunststoffteil applizierten Transferlage nach dem Folienapplikations- und Formgebungsprozess des Kunststoffformteils ablösbar ist, sowie auch als sogenanntes Laminiersystem, bei dem ein Verbleib der Trägerlage, insbesondere gemeinsam mit weiteren Lackschichten, auf der Formteiloberfläche vorgesehen ist. Mit Letzterem bieten sich weitere Möglichkeiten, wie etwa die Nutzung der Trägerlage als Oberflächenschutz sowie für eine "second surface" Dekoration, d.h. der Anordnung der dekorgebenden Schichten zwischen Kunststoffformkörper und Trägerlage.

Unter Umformen oder Formen wird im Folgenden unabhängig von einer makroskopischen Formgebung auch jegliche Art der Bewegung von Kunststoffmatrix verstanden, die über den Zweck der Formgebung eines zwei- oder dreidimensionalen Kunststoffformteils hinaus erforderlich ist, um dieses werkzeugfallend mit verbesserten Oberflächeneigenschaften zu versehen. Die Matrixbeweglichkeit wird dabei durch eine sich nach dem jeweiligen Matrixkunststoff richtende Temperatureinwirkung und/oder Druckbeaufschlagung geschaffen, beruhend darauf, dass die Kunststoffmatrix in einen fließfähigen und damit formbaren Zustand gebracht wird. Dadurch kann eine bessere Oberflächenqualität des Kunststoffformteils erzeugt werden. Diese definiert sich vorzugsweise darin, dass die durch matrixarme sowie -reiche und damit grundsätzlich von Unebenheiten gezeichnete Oberfläche des Faserverbundhalbzeugs durch eine im erfindungsgemäßen Prozess erzielte Matrixverteilung zumindest dergleichen geglättet wird, dass sie sich optisch deutlich verbessert im Vergleich zu Oberflächen bekannter Drapierform prozesse.

Ein solches Verfahren zum Herstellen eines erfindungsgemäßen Kunststoffformkörpers umfasst die Schritte:
a) Bereitstellen wenigstens eines Grundkörpers auf Basis wenigstens eines Faserverbundkunststoffs, wobei der wenigstens eine Grundkörper zumindest eine Flächengebildelage aus Endlosfasern und/oder Langfasern und/oder Kurzfasern in einer thermoplastischen Kunststoffmatrix aufweist;;
b) Bereitstellen wenigstens einer Dekorfolie, wobei die Dekorfolie eine ablösbare Trägerlage umfasst und ein Trockenlacksystem mit wenigstens einer Lackschicht ist, das zuvor auf die Trägerlage appliziert wird; wobei die zumindest eine Lackschicht eine Schichtdicke von 2 µm bis 15 µm aufweist und Bindemittel aus der Gruppe Acrylat, Aziridin, Polyurethan, Polyester, Polycarbonat, Nitrocellulose oder einem Gemisch aus diesen umfasst;
c) Aufheizen des wenigstens einen Grundkörpers auf eine Temperatur, die um 0°C bis 100°C größer ist als ein Schmelzpunkt oder eine Glasübergangstemperatur einer Kunststoffmatrix des Faserverbundkunststoffs;
d) Verbinden des wenigstens einen Grundkörpers und der wenigstens einen Dekorfolie in einem Formwerkzeug, wobei
   in Schritt d) ein Umformen des Grundkörpers mit der Dekorfolie in dem Formwerkzeug vorgesehen ist, und nach dem Umformen die Trägerlage von der Dekorfolie abgezogen wird und
e) zumindest eine Kunststoffstruktur an den Kunststoffformkörper durch Spritzgießen vollflächig, partiell oder umlaufend angeformt wird und Kantenbereiche des wenigstens einen Grundkörpers umspritzt werden, so dass freiliegende oder erst durch das Umformen freigelegte anorganische oder organische Verstärkungsfasern von der Kunststoffstruktur eingeschlossen werden;
wobei die Trägerlage während der Verarbeitung der Dekorfolie deren dem Grundkörper abgewandte Oberfläche ausbildet und die Dekorfolie bei der Verarbeitung schützt und stabilisiert.

Man erhält so einen Kunststoffformkörper mit wenigstens einem Grundkörper aus einem Faserverbundkunststoff, wobei der wenigstens eine Grundkörper zumindest eine Flächengebildelage aus Endlosfasern und/oder Langfasern und/ Kurzfasern in einer thermoplastischen Kunststoffmatrix aufweist und wenigstens einer Dekorfolie, welche zumindest einen Oberflächenbereich des Kunststoffformkörpers bildet bzw. bedeckt_und ein Trockenlacksystem mit wenigstens einer Lackschicht ist, das zuvor auf eine Trägerlage appliziert wurde; wobei die zumindest eine Lackschicht eine Schichtdicke von 2 µm bis 15 µm aufweist und Bindemittel aus der Gruppe Acrylat, Aziridin, Polyurethan, Polyester, Polycarbonat, Nitrocellulose oder einem Gemisch aus diesen umfasst; und der Kunststoffformkörper zumindest eine Kunststoffstruktur aufweist, welche an den Kunststoffformkörper durch Spritzgießen vollflächig, partiell oder umlaufend angeformt ist und Kantenbereiche des wenigstens einen Grundkörpers umspritzt sind, so dass freiliegende oder erst durch das Umformen freigelegte anorganische oder organische Verstärkungsfasern von der Kunststoffstruktur eingeschlossen sind.

Dabei ist es vorgesehen, dass in Schritt d) ein gemeinsames Umformen des Grundkörpers mit der Dekorfolie in dem Formwerkzeug vorgesehen ist. Dabei kann diese gemeinsame Umformung gleichzeitig erfolgen oder es wird alternativ zuerst die Dekorfolie durch Ansaugen an eine Innenseite des Formwerkzeugs vorgeformt und danach durch Schließen des Formwerkzeugs der Grundkörper gemeinsam mit der Dekorfolie weiter umgeformt.

Zur Durchführung des beschriebenen Verfahrens besonders geeignet ist ein Formwerkzeug zur Herstellung eines Kunststoffformkörpers, mit einer ersten Werkzeughälfte und mindestens einer zweiten Werkzeughälfte, zwischen denen im geschlossenen Zustand eine Kavität ausgebildet ist, welche komplementär zu einer Form des Kunststoffformkörpers ist, wobei zumindest ein der Kavität zugewandter Oberflächenbereich des Werkzeugs beim Schließen des Werkzeugs als Umformfläche zum Umformen wenigstens eines in das Werkzeug eingelegten Grundkörpers und wenigstens einer in das Werkzeug eingelegten Dekorfolie ausgebildet sein kann, und wobei ein Teilbereich der Kavität als Formhohlraum zum vollflächigen Hinterspritzen mit einer oder mehreren Kunststoffmassen oder Anspritzen zumindest eines Kunststoffelements an den umgeformten Grundkörper oder Umspritzen von zumindest einem Randbereichs des umgeformten Grundkörpers ausgebildet sein kann.

Auf diese Weise wird ein Kunststoffformkörper erhalten, der die hervorragenden mechanischen Eigenschaften von Faserverbundkunststoffen mit einer über Dekorfolien und deren Design- und/oder Funktionsmerkmale verbesserten, ansprechenden und/oder funktionalisierbaren Oberflächengestaltung verbindet. Durch die beim Aufheizen und Umformen eingebrachte Wärme in Kombination mit einer Druckbeaufschlagung wird gleichzeitig die wenigstens eine Dekorfolie mit dem wenigstens einen Grundkörper verbunden, so dass vorteilhafterweise auf einen separaten Arbeitsschritt hierfür verzichtet werden kann.

Da das Formwerkzeug im gleichen Zyklus auch das Überspritzen, aber auch das Hinter- oder Umspritzen sowie das Anspritzen weiterer Kunststoffelemente erlaubt, können zudem Strukturen aus polymeren Formmassen in dem Kunststoffformkörper eingebracht werden, die durch einfaches Umformen des wenigstens einen Grundkörpers nicht zu verwirklichen wären.

Ferner ermöglicht das Verfahren eine effizientere Werkstoffausnutzung durch eine bereits konturnahe Bereitstellung des wenigstens einen Grundkörpers. Durch die Integration von wenigstens zwei der Prozessschritte Umformen, Spritzgießen von Funktionselementen und Oberflächenbeschichtung in eine einzige Fertigungsstufe mittels des Formwerkzeugs kann ferner Energie und Verarbeitungszeit eingespart werden.

Das beschriebene Verfahren bietet zudem weitere Vorteile gegenüber konventionellen Lackier- und Lacksprühverfahren zur Oberflächenveredelung von Faserverbundkunststoffen. Diese sind üblicherweise an eine mehrstufige Verfahrensabfolge gebunden, bei der mehrere Lackierungsschritte erfolgen, beispielsweise eine kathodische Tauchlackierung (KTL), das Aufbringen von Füller, Base Coat und Clear Coat. Durch die einstufige Verarbeitung im Rahmen des beschriebenen Verfahrens bzw. mittels des beschriebenen Formwerkzeugs ergibt sich ein besonders schonender Prozess, da ein wiederholtes Aufheizen des Kunststoffformkörpers und/ oder Druckbeaufschlagung durch einzelne Formgebungs- und Beschichtungsprozesse vermieden wird. Dies verbessert auch die Qualität und Zuverlässigkeit von derart erhältlichen Kunststoffformteilen.

Damit gehen auch Kosteneinsparungen einher, nicht zuletzt aufgrund eines reduzierten Materialeinsatzes im Vergleich zum Stand der Technik, eine reduzierte Zykluszeit durch die einstufige Bearbeitung im beschriebenen Formwerkzeug und durch reduzierten Bauteilausschuss aufgrund der im Vergleich zu Nasslackierverfahren bereits vorab auf optische Mängel prüfbaren Dekorfolie.

Es ist dabei bevorzugt, wenn die Dekorfolie als Rollenware bereitgestellt wird und damit als Endlosware durch das Formwerkzeug mittels definierter Folienvorschubtechnologie gefördert werden kann. Dies vereinfacht die Handhabung der Dekorfolie, da erfindungsgemäß vorzugsweise auf die Verwendung von separaten Greifwerkzeugen oder dergleichen zum Einlegen der Dekorfolie in das Formwerkzeug verzichtet werden kann. Dies ermöglicht eine Verkürzung der Handlinganteile der Zykluszeit. Zudem ist es von Vorteil, dass die Dekorfolie von Ab- und Aufwickler der Rolle faltenfrei und erforderlichenfalls registergenau bzw. lagegenau positioniert gehalten werden kann.

Unter Registergenauigkeit bzw. Passergenauigkeit ist eine Lagegenauigkeit zweier oder mehr Elemente und/oder Schichten zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit zu erhöhen. Die lagegenaue Positionierung kann dabei insbesondere mittels sensorisch, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Alternativ kann die Dekorfolie vor dem Umformen durch Stanzen oder Ausschneiden bearbeitet werden.

Dabei kann die Dekorfolie ganz durchtrennt und im Zweidimensionalen auf eine der Abwicklung der gewünschten Endform entsprechende Kontur gebracht werden. Alternativ kann die Dekorfolie auch lediglich perforiert werden und erst im Formwerkzeug ganz durchtrennt werden.

Es ist möglich, dass die Dekorfolie vor dem Umformen auf den Grundkörper aufgebracht wird, insbesondere durch Abrollprägen, Kalandrieren oder Pressen.

Dies ist insbesondere vorteilhaft, wenn die Dekorfolie zunächst auf die gewünschte Form zugestanzt wird. Erfolgt das Aufbringen der Dekorfolie auf den Grundkörper vor dem Aufheizen, so kann der Aufheizschritt zudem genutzt werden, eine adhäsive oder stoffschlüssige Verbindung zwischen der Dekorfolie und dem Grundkörper herzustellen, die sich während eines Abkühlens des herzustellenden Kunststoffformteils im Formwerkzeug verfestigt. Bei einer derart vorfixierten Dekorfolie kann dann auf separate Halteelemente für die Dekorfolie im Formwerkzeugverzichtet werden, so dass sich die Handhabung von Dekorfolie und Grundkörper vereinfacht bzw. die vorteilhafte Beschichtung eines Kunststoffformkörpers auch ohne speziell für das Dekorfolienhandling ausgestatteten Formwerkzeugs ermöglich wird.

Alternativ ist es darüber hinaus möglich, dass die Dekorfolie erst im Formwerkzeug durch Stanzen derart zweidimensional konfektioniert wird, wie es eine der Abwicklung der gewünschten dreidimensionalen Endform entsprechende Kontur erfordert.

Es ist weiter bevorzugt, wenn der wenigstens eine Grundkörper als plattenförmiges Halbzeug bereitgestellt wird. Solche Halbzeuge, auch als Organobleche bezeichnet, können einfach auf die gewünschte Endkontur zugeschnitten werden, so dass wenig Material beim Zuschnitt verloren geht. Ferner sind Halbzeuge in Form von Plattenware besonders einfach in der Handhabung und deshalb bevorzugt. Organobleche sind leichte und steife Plattenhalbzeuge aus einer Kunststoffmatrix, in die Langfasern oder Endlosfasern, teilweise oder vollständig imprägniert, eingebettet sind. Während die Fasern maßgeblich die mechanischen Eigenschaften des Verbunds wie Festigkeit und Steifigkeit bestimmen, überträgt die Kunststoffmatrix aus wenigstens einem Kunststoff die Kräfte zwischen den Fasern, stützt die Fasern gegen Ausknicken und schützt sie vor äußeren Angriffen. Die Fasern können einerseits in nur eine Richtung orientiert sein (unidirektional, z.B. als Band [engl. "Tape"]), in zwei Richtungen rechtwinklig zueinander stehen (orthotrop oder balanciert), oder quasi-isotrop in jedem gewünschten Winkel zueinander platziert werden. Endlosfasern haben den Vorteil, dass sie sehr gestreckt mit hohem Orientierungsgrad und dadurch in größeren Mengen in die Kunststoffmatrix eingebracht werden können. Außerdem ermöglichen Sie den Kraftfluss zwischen Krafteinleitungspunkten innerhalb von Organoblechen allein über die Fasern, was die mechanische Leistungsfähigkeit eines Bauteils auf Basis eines solchen Organoblechs/Halbzeugs steigert. Vorzugsweise wird wenigstens ein Thermoplast als Kunststoff eingesetzt.

Bevorzugt wird der wenigstens eine Grundkörper durch Infrarotbestrahlung, Kontaktheizung, in einem Umluftofen oder innerhalb des Formwerkzeugs aufgeheizt. Hierdurch wird einfach und energieeffizient eine gleichmäßige Aufheizung des Grundkörpers sichergestellt.

Vorzugsweise wird der wenigstens ein Grundkörper vor dem Schließen des Formwerkzeugs aufgeheizt. Das Aufheizen kann entweder im Formwerkzeug oder außerhalb des Formwerkzeugs erfolgen, vorzugsweise im Formwerkzeug.

Dabei ist es bevorzugt, wenn der wenigstens eine Grundkörper auf eine Temperatur aufgeheizt wird, die um 0°C bis 100°C, bevorzugt um 10°C bis 50°C, höher ist, als der Schmelzpunkt bzw. die Glasübergangstemperatur des für die Matrix des Faserverbundkunststoffs einzusetzenden Kunststoffs. Dies ermöglicht eine zuverlässige Umformung des Grundkörpers im nachfolgenden Verfahrensschritt und ein gleichmäßiges Fließen der erweichten Kunststoffmatrix.

Weiter ist es dabei vorteilhaft, wenn der wenigstens eine Grundkörper auf eine Temperatur im Bereich von 100°C bis 300°C, bevorzugt auf eine Temperatur im Bereich von 160°C bis 280°C, weiter bevorzugt auf eine Temperatur im Bereich von 200°C bis 250°C aufgeheizt wird.

Die genauen Temperaturen sind dabei nach den jeweiligen Kunststoffen, vorzugsweise Thermoplasten, für die Kunststoffmatrix des wenigstens einen Grundkörpers zu wählen.

Ferner ist es vorteilhaft, wenn der wenigstens eine Grundkörper und die wenigstens eine Dekorfolie durch hydraulische, pneumatische oder elektrische Druckbeaufschlagung zwischen zwei Werkzeughälften des Formwerkzeugs zumindest bereichsweise miteinander verbunden werden. Hierdurch wird eine exakte Kontrolle von Druck und Umformgrad während des Umformvorgangs ermöglicht, so dass ein Kunststoffformkörper mit hoher Material- und Oberflächenqualität erhalten wird.

Es ist weiter bevorzugt, wenn das Formwerkzeug temperiert wird. Dies vermeidet ein vorschnelles Abkühlen des Grundkörpers insbesondere während des Umformens, welches zu schlechten Umformergebnissen führen könnte. Die Temperierung kann vor und/oder während und/oder nach dem Umformen erfolgen.

Dabei ist es bevorzugt, wenn das Formwerkzeug isotherm auf eine Temperatur von 40°C bis 180°C, bevorzugt von 70°C bis 150°C, weiter bevorzugt von 80°C bis 120°C beheizt wird.

Alternativ kann das Formwerkzeug variotherm temperiert werden, insbesondere mit einer Temperaturführung in einem Bereich zwischen 0K und 250K unter Schmelztemperatur eines verwendeten Polymers, mit einem Aufheiz- oder Abkühlgradienten von 1K/s bis 30K/s. Bei dieser Variante kann die Temperaturführung an den Umformprozess angepasst werden, so dass Schwindung und Verzug oder eine Verschlechterung der Oberflächenqualität, beispielsweise durch ungleichmäßige Schrumpfung bzw. Schwindung oder Ausdehnung des Kunststoffformteils vermieden werden können.

Es ist weiter bevorzugt, wenn die wenigstens eine Dekorfolie im Formwerkzeug anhand von auf der Dekorfolie aufgebrachten Passermarken und/oder in die Dekorfolie eingebrachten Stanzmarken passergenau positioniert wird. Bevorzugt wird hierzu ein mit der Prozesssteuerung verbundener Sensor zur Erkennung der Marken eingesetzt. Hierdurch wird eine exakte Relativlage zwischen Dekorfolie und Grundkörper sichergestellt, was notwendig ist, um optional über die Dekorfolie bereitstellbare dekorative Motive passgenau auf den Grundkörper aufzubringen und Ausschuss aufgrund von Fehlpositionierungen zu vermeiden.

Ferner ist es vorteilhaft, wenn der wenigstens eine Grundkörper und/oder die wenigstens eine Dekorfolie durch Klemmeinrichtungen und/oder Vakuum im Formwerkzeug fixiert werden. Damit wird ein Verschieben oder Verrutschen von Grundkörper und/oder Dekorfolie im Formwerkzeug vermieden, so dass die gewünschte Positionierung erhalten bleibt. Derartige Haltemittel erlauben es ferner, bei waagrechten Formwerkzeugen den Grundkörper oder die Dekorfolie in der oberen Werkzeughälfte zu positionieren, bzw. bei senkrechten Formwerkzeugen einen sicheren Halt des Grundkörpers oder der Dekorfolie in jeder der Werkzeughälften sicherzustellen.

Es ist vorgesehen, dass in einem weiteren Schritt e) zumindest eine Kunststoffstruktur an den Kunststoffformkörper durch Spritzgießen vollflächig, partiell oder umlaufend angeformt wird. Das Anformen kann dabei ein Spritzgießen, insbesondere Hinterspritzen und/oder Anspritzen und/oder Umspritzen sein oder umfassen. Hierdurch können zusätzliche Strukturelemente verwirklicht werden, die durch das Umformen allein nicht erzeugt werden können. Ferner ist es so möglich, Kantenbereiche des wenigstens einen Grundkörpers zu umspritzen, so dass freiliegende bzw. erst durch das Umformen freigelegte anorganische oder organische Verstärkungsfasern von der Kunststoffstruktur eingeschlossen werden können. Hierdurch wird ein Kunststoffformkörper mit besonders glatten Kanten bereitgestellt.

Es ist ferner vorteilhaft, wenn während des Umformens zumindest bereichsweise eine Oberflächenstruktur in den wenigstens einen Grundkörper und/oder in die Kunststoffstruktur und/oder in die wenigstens eine Dekorfolie eingebracht wird. Dies kann durch eine entsprechende Matrize im Formwerkzeug erfolgen. Ist die Innenoberfläche einer der Werkzeughälften beispielsweise aus unpoliertem Werkzeugstahl ausgebildet, so kann eine mattierte Oberfläche erzeugt werden. Auch andere Strukturen, wie beispielsweise taktil wahrnehmbare Reliefs oder dergleichen, können durch ein Formwerkzeug mit der entsprechenden Negativstruktur in der Umformfläche erzeugt werden.

Es ist dabei bevorzugt, wenn das Spritzgießen bei einer Temperatur im Bereich von 200°C bis 320°C, bevorzugt im Bereich von 240°C bis 290°C, weiter bevorzugt im Bereich von 240°C bis 270°C, erfolgt.

Ferner ist es vorteilhaft, wenn das Spritzgießen bei einem Druck im Bereich von 10 bar bis 2000 bar, bevorzugt im Bereich von 200 bar bis 1500 bar, weiter bevorzugt im Bereich von 500 bar bis 1300 bar, erfolgt.

Druck und Temperatur des Spritzgussvorgangs richten sich dabei nach der Art der verwendeten Kunststoffmasse, sowie nach der Geometrie der zu erzeugenden Kunststoffstruktur.

Besonders bevorzugt ist es, wenn das Spritzgießen im Formwerkzeug erfolgt. Vorzugsweise werden Schritt d) und e) in diesem Fall kombiniert durchgeführt.

Hierdurch kann auf ein zusätzliches Spritzgusswerkzeug verzichtet werden. Dies verringert sowohl den apparativen Aufwand als auch die Herstellungszeit und die Herstellungskosten.

Alternativ ist es weiterhin möglich, dass das Spritzgießen in einem separaten Spritzgusswerkzeug erfolgt.

Bei dieser Variante können beispielsweise bestehende Spritzgusswerkzeuge weiter verwendet werden.

Es ist ferner bevorzugt, wenn der Kunststoffformkörper nach dem Umformen und/oder nach dem Spritzgießen auf eine Temperatur im Bereich von 150°C bis 0°C abgekühlt wird, insbesondere mit einer Abkühlrate von 1K/s bis 30K/s.

Hierdurch wird eine kontrollierte Erstarrung der angespritzten Kunststoffstruktur bzw. des gesamten Kunststoffformkörpers erzielt, so dass Verzüge oder dergleichen beim Abkühlen vermieden werden.

Es ist vorgesehen, dass nach dem Umformen und/oder nach dem Spritzgießen eine Trägerlage von der Dekorfolie abgezogen wird. Eine solche Trägerlage kann die Dekorfolie während der Verarbeitung schützen, so dass eine besonders gute Oberflächenqualität erzielt wird. Gegebenenfalls ist es auch möglich, die Trägerlage erst bei der endgültigen Verarbeitung des Kunststoffformteils abzuziehen, beispielsweise erst nach dessen Einbau.

Dabei ist es vorteilhaft, wenn eine Dekorfolie mit einer Trägerlage aus PET mit einer Dicke von 5 µm bis 250 µm, bevorzugt von 12 µm bis 50 µm, verwendet wird.

Es ist vorgesehen, dass der wenigstens eine Grundkörper zumindest eine Flächengebildelage aus Endlosfasern und/oder Langfasern und gegebenenfalls Kurzfasern in einer thermoplastischen Kunststoffmatrix aufweist.

Vorzugsweise handelt es sich bei der zumindest einen Flächengebildelage um ein Gewebe und/oder ein Gelege und/oder eine Matte und/oder ein Vlies und/oder Gewirke und/oder Geflechte und/oder unidirektional ausgerichtete Flächengebilde wie zum Beispiel UD-Tapes (UD = unidirektional).

Als Fasermaterialien werden vorzugsweise anorganische Materialien, insbesondere silikatische oder nichtsilikatische Gläser, Kohlenstoff, Bor, Aramid, Siliciumcarbid, Metalle, Metalllegierungen, Metalloxide, Metallnitride, Metallcarbide und Silikate sowie organische Materialien, insbesondere natürliche oder synthetische Polymere, vorzugsweise Polyester, Polyamide und Naturfasern, insbesondere Baumwolle oder Cellulose sowie deren Kombinationen eingesetzt.

Vorzugsweise handelt es sich bei den einzusetzenden Verstärkungsfasern um wenigstens 10 mm lange bis endlose Verstärkungsfasern, wobei letztere als Einzelfasern Rovings, Stränge, Garne, Zwirne oder Seile vorliegen können.

Vorzugsweise weisen die einzelnen Filamente Durchmesser im Bereich von 0,5 µm bis 25 µm auf.

Unter endlosen Verstärkungsfasern werden solche verstanden, die im Allgemeinen eine Länge von über 50 mm, im Speziellen aber solche, deren Länge etwa der Längenausdehnung der jeweiligen Verbundwerkstoffe entspricht.

In einer Ausführungsform können aber auch Kombinationen verschiedener Fasermaterialien eingesetzt werden.

Solche Flächengebildelagen verleihen dem wenigstens einen Grundkörper die gewünschten mechanischen Eigenschaften. Sie können in ihrer Struktur an zu erwartende Belastungen des Kunststoffformkörpers angepasst werden, so dass dieser die für reale Lastfälle optimale Festigkeit und/oder Steifigkeit aufweist.

Die Flächengebildelagen bilden dabei keine von der Kunststoffmatrix separaten Schichten aus, sondern werden von dieser durchdrungen, so dass Fasern und Kunststoff ein integrales Bauteil bilden.

Insbesondere ist es vorteilhaft, wenn die zumindest eine Flächengebildelage ein Gewebe und/oder ein Gelege und/oder eine Matte und/oder ein Vlies aus Glasfasern und/oder Carbonfasern und/oder Aramidfasern und/oder Naturfasern ist oder umfasst.

Je nach Anwendungsfall können unterschiedliche Fasermaterialen und unterschiedliche Typen von Flächengebildelagen frei miteinander kombiniert werden, um eine jeweils optimierte Struktur des Kunststoffformkörpers zu schaffen.

Bevorzugt weist dabei die zumindest eine Flächengebildelage ein Flächengewicht im Bereich von 5 g/m² bis 3000 g/m², bevorzugt im Bereich von 100 g/m² bis 900 g/m², besonders bevorzugt im Bereich von 150 g/m² bis 400 g/m² auf.

Weiterhin ist es vorteilhaft, wenn der Grundkörper maximal 100 Flächengebildelagen, bevorzugt 2 bis 40 Flächengebildelagen, besonders bevorzugt 2 bis 10 Flächengebildelagen, aufweist.

Auch hier erfolgt die Wahl der Anzahl der Flächengebildelagen nach den zu erwartenden Lastfällen und nach der gewünschten Schichtdicke des Grundkörpers.

Zweckmäßig ist es dabei, wenn der wenigstens eine Grundkörper eine Materialstärke im Bereich von 0,05 mm bis 6 mm, bevorzugt im Bereich von 0,1 mm bis 2 mm, besonders bevorzugt im Bereich von 0,5 mm bis 1,5 mm, mit einem Faservolumengehalt im Bereich von 25% bis 85%, bevorzugt im Bereich von 35% bis 65%, besonders bevorzugt im Bereich von 45% bis 55% aufweist.

Die Kunststoffmatrix des Faserverbundkunststoffs enthält als wesentlichen Bestandteil wenigstens einen Kunststoff, vorzugsweise wenigstens einen Thermoplasten. Bevorzugt wird wenigstens ein Thermoplast aus der Gruppe der Polyolefine, Vinylpolymerisate, Polyacrylate, Polyamide, Polyurethane, Polyharnstoffe, Polyimide, Polyester, Polyether, Polystyrole, Polyhydantoine, Polyphenylenoxide, Polyarylensulfide, Polysulfone, Polycarbonate, PMMA, SAN, TPO, TPU und POM ausgewählt.

Bevorzugte Vinylpolymerisate sind auszuwählen aus der Gruppe Polyvinylhalogenide, Polyvinylester, Polyvinylether.

Bevorzugte Polyamide sind auszuwählen aus der Gruppe PA 66, PA 6 und PA 12.

Besonders bevorzugt wird wenigstens ein Thermoplast aus der Gruppe PA66, PA 6, PA 12, PPA, PP, PPS, TPU und PC für die Kunststoffmatrix des Faserverbundkunststoffs ausgewählt.

Ganz besonders bevorzugt wird wenigstens ein Thermoplast aus der Gruppe TPU, PA 6 und PC ausgewählt.

Insbesondere bevorzugt wird wenigstens ein Thermoplast in flammgeschützter Form für die Kunststoffmatrix des Faserverbundkunststoffs eingesetzt. Die Thermoplaste können auch in verschiedensten Kombinationen miteinander eingesetzt werden, bevorzugt wird eine Kombination von PC/ ABS eingesetzt.

In einer bevorzugten Ausführung ist der wenigstens eine Grundkörper von wenigstens einer Schicht überzogen, insbesondere wenigstens einer faserfreien Kunststoffschicht und/oder einer eine elektrischen Funktion ermöglichenden Schicht.

Hierdurch können die Eigenschaften des Kunststoffformkörpers weiter angepasst werden. Weitere Kunststoffschichten können die mechanischen Eigenschaften des Grundkörpers optimieren. Funktionsschichten können zusätzliche Funktionen, beispielsweise elektronischer oder optischer Art, in den Grundkörper einbringen.

Vorzugsweise enthält die wenigstens eine Überzugsschicht denselben Kunststoff, vorzugsweise Thermoplasten, wie der wenigstens eine Grundkörper.

Die wenigstens eine Dekorfolie umfasst zumindest eine Lackschicht, insbesondere aus gegebenenfalls radikalisch vernetzten Bindemitteln, z.B. Acrylat, Aziridin, Polyurethan, Polyester, Polycarbonat, Nitrocellulose oder einem Gemisch aus diesen. Eine solche Lackschicht stellt die einfachste Möglichkeit dar, ein Dekor zu verwirklichen. Die Lackschicht kann dabei transparent, transluzent oder opak und dabei jeweils entweder farbig oder farblos sein. Die Lackschicht kann vollflächig oder lediglich partiell vorliegen. Die Lackschicht kann sowohl optische als auch nicht optisch wirksame, technisch funktionale Effekte erzeugen.

In einer besonders einfachen Ausführungsform kann diese Lackschicht selbst als Kleberschicht dienen, also unter Nutzung von im Prozess vorhandener bzw. eingebrachter Wärme die Verbindung mit dem Grundkörper herstellen. Die Dekorfolie wäre in diesem Fall also nur einschichtig.

Die zumindest eine Lackschicht weist dabei die eine Schichtdicke von 2 µm bis 15 µm auf.

In einer weiteren bevorzugten Ausführungsform umfasst die Dekorfolie zumindest eine Grundierungsschicht, insbesondere aus Acrylat, PVC, chloriertem Polyolefin oder einem Gemisch aus diesen.

Die Grundierungsschicht liegt dabei vorzugsweise zwischen einer Lackschicht und dem Grundkörper. Hierdurch kann beispielsweise ermöglicht werden, Lackschichten aufzubringen, deren Materialien nicht in der Weise mit dem Material des Grundkörpers kompatibel sind, dass sie sich direkt haftfest miteinander verbinden lassen würden.

Bevorzugt weist die zumindest eine Grundierungsschicht eine Schichtdicke im Bereich von 1 µm bis 4 µm auf.

Es ist weiter bevorzugt, wenn die zumindest eine Grundierungsschicht und/oder die zumindest eine Lackschicht Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel umfasst.

Hierdurch können vielfältige Dekore verwirklicht werden. Die Farbmittel müssen dabei nicht homogen in der jeweiligen Schicht vorhanden sein, sondern können über deren flächige Erstreckung auch variieren und so Motive ausbilden. Dabei können sich die Farbmittel der Lackschicht und Grundierungsschicht auch ergänzen, so dass komplexe Designs verwirklicht werden können.

Dabei ist es bevorzugt, wenn die zumindest eine Lackschicht und/oder die zumindest eine Grundierungsschicht eine Pigmentierung im Bereich von 5% bis 40% aufweist.

In einer weiteren bevorzugten Ausführungsform weist die Dekorfolie zumindest eine Klarlackschicht, insbesondere mit gegebenenfalls radikalisch vernetzten Bindemitteln, z.B. Acrylat, Melamin, Aziridin, Polyurethan, Polyester, Polycarbonat, Nitrocellulose oder einem Gemisch aus diesen auf. Eine solche Klarlackschicht bildet im fertigen Kunststoffformkörper bevorzugt eine äußere Oberfläche aus und dient damit der Versiegelung der Dekorfolie nach außen, so dass diese beispielsweise vor mechanischen oder chemischen Einflüssen geschützt wird.

Vorzugsweise weist dabei die zumindest eine Klarlackschicht eine Schichtdicke im Bereich von 3 µm bis 10 µm auf.

Es ist vorgesehen, dass die Dekorfolie eine ablösbare Trägerlage, insbesondere aus PET umfasst. Eine solche Trägerlage bildet während der Verarbeitung der Dekorfolie deren dem Grundkörper abgewandte Oberfläche aus und schützt und stabilisiert die Dekorfolie bei der Verarbeitung. Die Trägerlage kann nach Fertigstellung des Kunststoffformkörpers oder auch erst nach dessen Einbau in seine Endmontagelage entfernt werden und bietet hierüber die Möglichkeit, ein dünnschichtiges Paket an Trockenlack als Transferlage auf die Formteiloberfläche zu übertragen, mit der die Transferlage adhäsiv und/oder unter Stoffschluss einen haftfesten Verbund eingehen kann.

Vorzugsweise weist dabei die Trägerlage eine Schichtdicke im Bereich von 5 µm bis 250 µm, bevorzugt im Bereich von 12 µm bis 50 µm, auf. Es ist ferner bevorzugt, wenn die Dekorfolie zumindest eine Ablöseschicht, insbesondere aus Melamin, PE, Carnauba, PTFE, Cellulose umfasst.

Eine solche Ablöseschicht ist dabei vorzugsweise zwischen der Trägerlage und den weiteren Schichten der Dekorfolie angeordnet und erlaubt die rückstands- und beschädigungsfreie Ablösung der Trägerlage von diesen.

Dabei weist die zumindest eine Ablöseschicht bevorzugt eine Schichtdicke im Bereich von 0,5 µm bis 3 µm auf.

Es ist weiter zweckmäßig, wenn die Dekorfolie zumindest eine Kleberschicht, insbesondere aus Acrylat, PVC, chloriertem Polyolefin oder einem Gemisch aus diesen umfasst.

Die Kleberschicht dient der Verbindung der Dekorfolie mit dem Grundkörper und bildet daher vor dem Anbringen der Dekorfolie am Grundkörper eine Oberfläche der Dekorfolie aus. Die Materialzusammensetzung der Kleberschicht richtet sich dabei nach der Materialzusammensetzung des Grundkörpers, so dass beim Erhitzen bzw. Umformen eine feste Verbindung zwischen Dekorfolie und Grundkörper entstehen kann.

Es ist dabei bevorzugt, wenn die zumindest eine Kleberschicht eine Schichtdicke im Bereich von 1 µm bis 5 µm, aufweist.

Weiterhin ist es zweckmäßig, wenn die Dekorfolie zumindest eine Replizierschicht, insbesondere aus einem Acrylat umfasst, in die ein Oberflächenrelief eingebracht ist.

Durch Replizierschichten mit solchen Reliefstrukturen können vielfältige optische, insbesondere optisch variable Effekte, aber auch funktionelle Effekte wie zum Beispiel taktile bzw. haptische Eigenschaften oder auch Flüssigkeiten annehmende oder abstoßende Eigenschaften verwirklicht werden. Insbesondere können durch unterschiedlich ausgebildete Strukturen der Replizierschicht unterschiedliche Glanzgrade der Dekorfolie hervorgerufen werden, die von hochglänzend über matt glänzend bis zu matten oder glänzenden Bürststrukturen gehen. Insbesondere die erwähnten Bürststrukturen können mittels Replikation, aber auch mittels spezieller Bürstwerkzeuge in die Replizierschicht eingebracht worden sein.

Bevorzugt weist dabei die zumindest eine Replizierschicht eine Schichtdicke im Bereich von 0,3 µm bis 3 µm, bevorzugt im Bereich von 0,5 µm bis 1,5 µm auf.

Es ist dabei insbesondere zweckmäßig, wenn das Oberflächenrelief der zumindest einen Replizierschicht zumindest ein optisch variables Element, insbesondere ein Hologramm, Kinegram^{®} oder Trustseal^{®}, ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope Mattstruktur, oder eine lichtbeugende und/oder lichtbrechende und/oder lichtfokussierende Mikro- oder Nanostruktur, eine binäre oder kontinuierliche Fresnelllinse, eine binäre oder kontinuierliche Fresnel-Freiformfläche, eine Mikroprismenstruktur oder eine Kombinationsstruktur daraus ausbildet.

Hierdurch können vielfältige ansprechende Designs verwirklicht werden, die zudem schwer nachzuahmen sind.

In einer weiteren bevorzugten Ausführungsform umfasst die Dekorfolie zumindest eine Reflexionsschicht, insbesondere aus einem Metall, bevorzugt aus Aluminium, Silber, Gold, Chrom, Zinn oder einer Legierung oder einem Oxid daraus, und/oder aus einem Material mit hohem Brechungsindex, insbesondere aus ZnS oder TiO₂.

Derartige Schichten können auch partiell vorliegen und damit selbst Muster oder Motive ausbilden. Ferner kann eine Reflexionsschicht auch zur Sichtbarmachung, bzw. Kontrastverbesserung von diffraktiven oder refraktiven Reliefstrukturen in einer Replizierschicht sowie der Erzielung von definierten Glanzgraden dienen.

Es ist dabei zweckmäßig, wenn die zumindest eine Reflexionsschicht eine Schichtdicke im Bereich von 10 nm bis 200 nm, bevorzugt im Bereich von 10 nm bis 50 nm, besonders bevorzugt im Bereich von 15 nm bis 35 nm, aufweist.

Ferner ist es bevorzugt, wenn die Dekorfolie zumindest eine Funktionsschicht, insbesondere eine elektrische Funktionsschicht aufweist. Dabei kann es sich beispielsweise um Funktionsschichten handeln, die elektrische Schaltkreise wie Antennenstrukturen, Koppelflächen, LED-basierte Anzeigeelemente, Touchsensorik-Funktionen, Abschirmungen gegen elektromagnetische Felder oder dergleichen ausbilden. Neben einem ansprechenden Design können so auch funktionale Elemente integriert werden, so dass ein derartiges Kunststoffformteil beispielsweise auch als Bedienfläche für ein Gerät verwendet werden kann.

Der Kunststoffformkörper umfasst zumindest eine Kunststoffstruktur, die aus mechanischen Stabilitätsgründen vollflächig hinterspritzt oder zur Funktionsintegration spezifischer Kunststoffelemente partiell angespritzt oder auch zur Glättung und/oder zumindest bereichsweisen Versiegelung von Randbereichen umspritzt sein kann. Vorzugsweise wird hierfür derselbe Kunststoff, vorzugsweise ein Thermoplast, eingesetzt, der als wesentliche Komponente im Grundkörper enthalten ist. Hierdurch kann eine feste Verbindung zwischen der Kunststoffstruktur und dem Grundkörper sichergestellt werden.

Alternativ kann ein Thermoplast eingesetzt werden, der dazu geeignet ist, eine haftfeste Verbindung mit zumindest einem der im Grundkörper enthaltenen Thermoplasten einzugehen. Es kann sich in einer weiteren Ausführungsform von Vorteil erweisen, wenn die Kunststoffstruktur mit mindestens zwei Thermoplasten unterschiedlicher Eigenschaften mittels Spritzgussverfahren durch Kombination der vorgenannten Techniken Hinterspritzen, Anspritzen und Umspritzen, beispielsweise zur Realisierung einer unterschiedlichen Einfärbung bestimmter Bereiche des Kunststoffformkörpers oder zur Integration zusätzlicher Dichtelemente am Kunststoffformkörper, hergestellt wird.

Bevorzugt für den Spritzguss einzusetzende Thermoplasten werden ausgewählt aus der Gruppe der Polyolefine, Vinylpolymerisate, Polyacrylate, Polyamide, Polyurethane, Polyharnstoffe, Polyimide, Polyester, Polyether, Polystyrole, Polyhydantoine, Polyphenylenoxide, Polyarylensulfide, Polysulfone, Polycarbonate, PMMA, SAN, TPO, TPU und POM.

Bevorzugte Vinylpolymerisate sind auszuwählen aus der Gruppe Polyvinylhalogenide, Polyvinylester, Polyvinylether.

Bevorzugte Polyamide sind auszuwählen aus der Gruppe PA 66, PA 6 und PA 12.

Besonders bevorzugt wird wenigstens ein Thermoplast aus der Gruppe PA66, PA 6, PA 12, PPA, PP, PPS, TPU und PC für den Spritzguss ausgewählt.

Ganz besonders bevorzugt wird wenigstens ein Thermoplast aus der Gruppe TPU, PA 6 und PC für den Spritzguss ausgewählt.

Hierdurch können Strukturen verwirklicht werden, die allein durch die Umformung des Grundkörpers nicht geschaffen werden können, da entweder der notwendige Umformgrad nicht erreicht werden kann, oder da entsprechende Hinterschnitte nicht durch Umformen zu erzielen sind.

Weiterhin ist es bevorzugt, wenn das Material der zumindest einen Kunststoffstruktur Zuschlagstoffe, insbesondere Glas-, Carbon- oder Naturfasern mit bevorzugten Füllgraden im Bereich von 20 m% bis 60 m% (m% = Massenprozent) , Kupfer, Aluminiumoxid, Graphit, Mittel zur Verbesserung der Fließfähigkeit, UV-Stabilisatoren, Flammschutzmittel, Schaumbildner, Mittel zur Ableitung statischer Aufladung oder zur Ausbildung elektrischer Leitfähigkeitspfade enthält.

Solche Zuschlagstoffe können der Kunststoffstruktur zusätzliche visuelle, mechanische, chemische oder funktionale Eigenschaften verleihen.

Ferner ist es zweckmäßig, wenn das Material der zumindest einen Kunststoffstruktur Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel, umfasst

Damit kann die Kunststoffstruktur auch optisch an das Erscheinungsbild des restlichen Kunststoffformkörpers angepasst werden.

Es ist weiter bevorzugt, wenn die zumindest eine Kunststoffstruktur einen oder mehrere Kantenbereiche des wenigstens einen Grundkörpers umschließt.

Hierdurch können überstehende bzw. durch das Umformen freigelegte Fasern des wenigstens einen Grundkörpers in der Kunststoffstruktur eingeschlossen werden, so dass sich eine glatte, optisch und taktil ansprechende Kante des Kunststoffformkörpers ergibt.

Weiterhin ist es bevorzugt, wenn die zumindest eine Kunststoffstruktur Verstärkungselemente, insbesondere Rippenkörper oder Dome, und/oder Befestigungselemente, insbesondere Clipse, Rasthaken, Schnapphaken, Konsolen, Schrauböffnungen, Rastöffnungen, Federn, Nuten oder dergleichen, umfasst.

Dies ermöglicht in vorteilhafter Weise die Verbindung des Kunststoffformkörpers mit weiteren Bauteilen, ohne dass separate Befestigungsmittel notwendig sind und/oder trägt weiter zur mechanischen Stabilisierung des Kunststoffformkörpers bei.

Es ist weiter bevorzugt, wenn zumindest eine Werkzeughälfte des Spritzgusswerkzeugs zumindest einen Angusskanal zum Einspritzen einer Spritzgussmasse in den Formhohlraum aufweist. Dabei handelt es sich vorzugsweise um einen Heißkanal oder Kaltkanal. In einem Kaltkanal erstarrt die Spritzmasse und muss mit dem fertigen Kunststoffformkörper entnommen werden und anschließend oder bereits bei der Entnahme von diesem abgetrennt werden. In einem Heißkanal wird die spritzgussfähige Kunststoffmasse erhitzt, so dass sie nicht erstarrt und im Werkzeug verbleibt. Dabei kann auf ein späteres Abtrennen des Angusssystems vom Werkstück verzichtet werden, allerdings ist diese Lösung apparativ aufwendiger und benötigt gegebenenfalls zusätzliche Ventile im Angusssystem.

Es ist weiter bevorzugt, wenn der zumindest eine Angusskanal ein relativ zur Kavität verschiebbares Element umfasst, mittels welchem ein über den Grundkörper überstehender Teilbereich der Dekorfolie durchstoßbar ist. Dies ermöglicht es, die Kunststoffmasse auch von Seiten der Dekorfolie her in einen Bereich zwischen Dekorfolie und Grundkörper einzuspritzen.

Ferner ist es vorteilhaft, wenn zumindest eine Werkzeughälfte eine Haltevorrichtung für den Grundkörper und/oder die Dekorfolie aufweist, insbesondere eine Klemmvorrichtung und/oder eine Ansaugvorrichtung. Hierdurch können Grundkörper und Dekorfolie im Formwerkzeug fixiert werden, so dass eine zuverlässige Positionierung der jeweiligen Teile sichergestellt ist.

In einer weiteren bevorzugten Ausführungsform umfasst zumindest eine Werkzeughälfte ein Dichtelement zum Abdichten der Kavität. Dies ermöglicht es, einen Unterdruck bzw. ein Vakuum in der Kavität aufrecht zu erhalten. Einerseits kann dies zum Fixieren der Dekorfolie und/oder des Grundkörpers im Werkzeug dienen, andererseits kann durch eine Evakuierung der Kavität auch die optische Qualität beeinträchtigende Lufteinschlüsse während des Umformvorgangs vermieden werden.

Weiter ist es bevorzugt, wenn zumindest eine Werkzeughälfte eine Stanzvorrichtung zum Abtrennen und/oder Perforieren eines Teilbereichs der Dekorfolie umfasst. Auf diese Weise kann auf separate Stanzwerkzeuge verzichtet werden und die Dekorfolie als Rollenware in das Formwerkzeug transportiert werden. Bevorzugt wird dann beim Schließen der Werkzeughälften die Dekorfolie auf die gewünschte Form gestanzt.

Es ist ferner zweckmäßig, wenn zumindest eine Werkzeughälfte eine Temperiervorrichtung, insbesondere wenigstens einen Temperiermittelkanal und/oder wenigstens eine elektrische Temperiervorrichtung, zum Temperieren der in die Kavität eingebrachten Materialien umfasst. Hierdurch kann die Temperatur des Grundkörpers während des Umformens und/oder die Temperatur der Kunststoffmasse während des Spritzgießens passend beeinflusst werden, so dass ein vorzeitiges Abkühlen vermieden wird und eine besonders gute Umform- und Urformqualität erzielt wird.

In einer weiteren bevorzugten Ausführungsform umfasst zumindest eine Werkzeughälfte zumindest einen Schieber, welcher relativ zum Formhohlraum beweglich und in diesen einführbar ist. Hierdurch können Hinterschnitte in der angespritzten Kunststoffstruktur verwirklicht werden.

Weiter ist es bevorzugt, wenn zumindest eine Werkzeughälfte zumindest ein Auswerferelement, insbesondere einen Auswerferstift, zum Auswerfen des fertigen Kunststoffformteils umfasst. Dies ermöglicht ein einfaches Entfernen des fertigen Kunststoffformkörpers aus dem Formwerkzeug.

Es ist ferner zweckmäßig, wenn das Formwerkzeug eine elektrische, hydraulische oder pneumatische Pressvorrichtung umfasst, mittels welcher die Werkzeughälften gegeneinander bewegbar und aneinander anpressbar sind. Vorteilhafterweise sind die einzelnen Kraft erzeugenden Elemente der Pressvorrichtung separat steuerbar. Hierdurch kann die Relativbewegung der Werkzeughälften exakt gesteuert werden und der Anpressdruck während des Umformens genau kontrolliert werden.

Weiter ist es bevorzugt, wenn Entformungsschrägen des Formwerkzeugs im Bereich der Umformflächen einen Winkel von mehr als 2° aufweisen.

Es ist dabei auch zweckmäßig, wenn Innenradien des Formwerkzeugs im Bereich der Umformflächen größer als eine Dicke des Grundkörpers sind.

Ferner sind die Außenradien des Formwerkzeugs im Bereich der Umformflächen bevorzugt größer als die Summe der Innenradien des Formwerkzeugs im Bereich der Umformflächen und der Dicke des Grundkörpers.

Es ist ebenfalls vorteilhaft, wenn die Entformungsschrägen des Formwerkzeugs im Bereich des Formhohlraums einen Winkel von mehr als 0,5° aufweisen. Durch diese geometrischen Parameter wird ein problemloses Entformen des gefertigten Kunststoffformkörpers ermöglicht.

In einer weiteren bevorzugten Ausführungsform weist die Umformfläche zumindest bereichsweise eine isotrope oder anisotrope Oberflächenstruktur auf. Hierdurch kann das Erscheinungsbild des gefertigten Kunststoffformkörpers kontrolliert werden und beispielsweise eine mattierte Oberfläche oder spezifische taktile Strukturen erzeugt werden.

Ferner ist es bevorzugt, wenn das Formwerkzeug eine Fördereinrichtung zum Fördern der Dekorfolie relativ zum Formwerkzeug umfasst. Dies ermöglicht eine besonders einfache Verarbeitung der Dekorfolie als Rollenware, so dass keine zusätzlichen Greifer oder dergleichen benötigt werden.

Die Erfindung wird nun anhand von Ausführungsbeispielen näher erläutert. Es zeigen
- Fig. 1: Eine schematische Schnittdarstellung eines Grundkörpers zur Herstellung eines Ausführungsbeispiels eines Kunststoffformkörpers;
- Fig. 2: Eine schematische Schnittdarstellung einer Dekorfolie zur Herstellung eines Ausführungsbeispiels eines Kunststoffformkörpers;
- Fig. 3: Eine schematische Schnittdarstellung eines Ausführungsbeispiels eines Kunststoffformkörpers mit einem Grundkörper nach Fig. 1 und einer Dekorfolie nach Fig. 2;
- Fig. 4: Eine schematische Darstellung der Verfahrensschritte eines Ausführungsbeispiels eines Verfahrens zur Herstellung eines Kunststoffformkörpers;
- Fig. 5: Eine schematische Darstellung zweier Ausführungsbeispiele eines Formwerkzeugs zur Herstellung eines Kunststoffformkörpers;
- Fig. 6: Eine schematische Darstellung der Verfahrensschritte eines alternativen Ausführungsbeispiels eines Verfahrens zur Herstellung eines Kunststoffformkörpers;
- Fig. 7: Eine schematische Darstellung der Verfahrensschritte eines weiteren alternativen Ausführungsbeispiels eines Verfahrens zur Herstellung eines Kunststoffformkörpers.

Zur Herstellung eines beschichteten, faserverstärkten Kunststoffformkörpers wird zunächst wenigstens ein Grundkörper 1 aus einem faserverstärkten Kunststoff bereitgestellt. Der wenigstens eine Grundkörper 1 umfasst zumindest eine Flächengebildelage aus Endlosfasern und/oder Langfasern in einer thermoplastischen Kunststoffmatrix.

Solche Flächengebildelagen verleihen dem wenigstens einen Grundkörper 1 die gewünschten mechanischen Eigenschaften. Sie können in ihrer Struktur an zu erwartende Belastungen des Kunststoffformkörpers angepasst werden, so dass dieser die für reale Lastfälle optimale Festigkeit und/oder Steifigkeit aufweist.

Die Flächengebildelagen bilden dabei keine von der Kunststoffmatrix separaten Schichten aus, sondern werden von dieser durchdrungen, so dass Fasern und Kunststoff ein integrales Bauteil bilden.

Insbesondere ist es vorteilhaft, wenn die zumindest eine Flächengebildelage ein Gewebe und/oder ein Gelege und/oder eine Matte und/oder ein Vlies aus Glasfasern und/oder Carbonfasern und/oder Aramidfasern und/oder Naturfasern ist oder umfasst.

Je nach Anwendungsfall können unterschiedliche Fasermaterialen und unterschiedliche Typen von Flächengebildelagen frei miteinander kombiniert werden, um eine jeweils optimierte Struktur des Kunststoffformkörpers zu schaffen.

Bevorzugt weist dabei die zumindest eine Flächengebildelage ein Flächengewicht von 5 g/m² bis 3000 g/m², bevorzugt von 100 g/m² bis 900 g/m², besonders bevorzugt von 150 g/m² bis 400 g/m² auf.

Weiterhin ist es vorteilhaft, wenn der wenigstens eine Grundkörper maximal 100 Flächengebildelagen, bevorzugt 2 bis 40 Flächengebildelagen, besonders bevorzugt 2 bis 10 Flächengebildelagen, aufweist.

Auch hier erfolgt die Wahl der Anzahl der Flächengebildelagen nach den zu erwartenden Lastfällen und nach der gewünschten Schichtdicke des Grundkörpers 1.

Vorzugsweise besitzen die verwendeten Faserlagen dasselbe Flächengewicht und sind aus derselben Faserart. Es können aber auch Kombinationen von verschiedenen Fasermaterialien eingesetzt werden. Bevorzugte Fasermaterialien sind silikatische und nichtsilikatische Gläser verschiedenster Art, Kohlenstoff, Bor, Siliciumcarbid, Metalle, Metalllegierungen, Metalloxide, Metallnitride, Metallcarbide und Silikate sowie verschiedene organische Materialien, vorzugsweise natürliche oder synthetische Polymere, vorzugsweise Polyacrylnitride, Polyester, ultrahochgereckte Polyolefinfasern, Polyamide, Polyimide, Aramide, Liquid-Crystal-Polymere, Polyphenylensulfide, Polyetherketone, Polyetheretherketone, Polyetherimide, Baumwolle und Cellulose.

In einer Ausführungsform werden Kohlenstofffaser-Gewebe in den Außenlagen und Glasfaserlagen in den Mittellagen kombiniert. Darüber hinaus ist auch eine Kombination von Lagen unterschiedlicher Flächengewichte möglich. Im Falle solcher Verbunde ist eine Mittensymmetrie sehr wichtig. Mittensymmetrie im Sinne der vorliegenden Erfindung bedeutet, dass die einzelnen Lagen so dimensioniert und angeordnet sind, dass die ggf. unterschiedlichen mechanischen Eigenschaften sowie das temperaturbedingt ggf. unterschiedliche Dehnungs- und Schrumpfverhalten der einzelnen Lagen nicht dazu führen, dass ein flach in einer Ebene hergestellter Kunststoffformkörper sich durch Temperatureinwirkung verzieht und uneben wird bzw. bei Biegebelastung des Bauteils eine biegerichtungsabhängig unterschiedliche Stabilität entlang der selben Biegeachse gemessen werden könnte.

Zweckmäßig ist es dabei, wenn der wenigstens eine Grundkörper 1 eine Materialstärke im Bereich von 0,05 mm bis 6 mm, bevorzugt im Bereich von 0,1 mm bis 2 mm, besonders bevorzugt im Bereich von 0,5 mm bis 1,5 mm, mit einem Faservolumengehalt im Bereich von 25% bis 85%, bevorzugt im Bereich von 35% bis 65%, besonders bevorzugt im Bereich von 45% bis 55% aufweist.

Bevorzugt wird wenigstens ein Thermoplast in flammgeschützter Form für die Kunststoffmatrix des Faserverbundkunststoffs eingesetzt. Die Thermoplaste können auch in verschiedensten Kombinationen miteinander eingesetzt werden, bevorzugt wird eine Kombination von PC/ ABS eingesetzt. Auch Kombinationen der genannten Kunststoffe können Anwendung finden.

In einer bevorzugten Ausführung ist der Grundkörper 1 von wenigstens einer Schicht überzogen, insbesondere wenigstens einer faserfreien Kunststoffschicht und/oder einer eine elektrischen Funktion ermöglichenden Schicht. Hierdurch können die Eigenschaften des Kunststoffformkörpers weiter angepasst werden. Weitere Kunststoffschichten können die mechanischen Eigenschaften des Grundkörpers 1 optimieren. Funktionsschichten können zusätzliche Funktionen, beispielsweise elektronischer oder optischer Art, in den Grundkörper 1 einbringen.

Vor der Weiterverarbeitung wird der Grundkörper 1 imprägniert und konsolidiert. Die Imprägnierung bezeichnet das vollständige Benetzen aller Fasern und die Konsolidierung bezeichnet das Exprimieren von eingeschlossener Luft über die Schmelze des Thermoplasten. Der Vorgang der Imprägnierung und Konsolidierung ist deshalb abhängig von den Parametern Temperatur, Druck und Zeit.

Vorzugsweise bedeutet "konsolidiert" im Sinne der vorliegenden Erfindung, dass im Faserverbundwerkstoff einen Luftanteil von weniger als 10 Volumen-% vorliegt.

Das Imprägnieren der Fasern hängt von der Viskosität des einzusetzenden Kunststoffs, insbesondere Thermoplasten, ab. Da Thermoplastschmelzen im Allgemeinen hohe Viskositäten aufweisen, ist das Imprägnieren der Fasern abhängig von hohen Drücken und/oder Temperatur und der Zeit.

Zur Erzielung optimaler mechanischer Eigenschaften ist neben einer Konsolidierung eine möglichst vollständige Imprägnierung der Filamente mit dem Thermoplast der Matrix erforderlich. Beide Eigenschaften lassen sich durch die Bestimmung mechanischer Kennwerte messen, insbesondere der Zugfestigkeit. Zur Ermittlung der Zugfestigkeit dient der Zugversuch, ein quasistatisches, zerstörendes Prüfverfahren, im Falle von Kunststoffen nach ISO 527-4 oder -5. Vorzugsweise einzusetzende thermoplastische Faserverbundwerkstoffe weisen deshalb in Abhängigkeit von der einzusetzenden Faser Zugfestigkeiten im Bereich von 250 bis 2000 MPa nach ISO 527-4 oder -5 auf.

In der voll-imprägnierten und voll-konsolidierten Form besitzen die Fasern des Flächengebildes die Aufgabe, dem Grundkörper 1 Festigkeit und Steifigkeit zu verleihen, wohingegen die Matrix im Vergleich zu den eher spröden Fasern die Bruchdehnung des Gesamtverbundes positiv beeinflusst. Durch die unterschiedliche Orientierung der Fasern zum Beispiel in Form eines Gewebes kann speziellen Lastfällen entgegen gewirkt werden (Anisotropie). Eine Isotropie kann zum Beispiel durch die Nutzung eines Wirrfaservlieses erreicht werden.

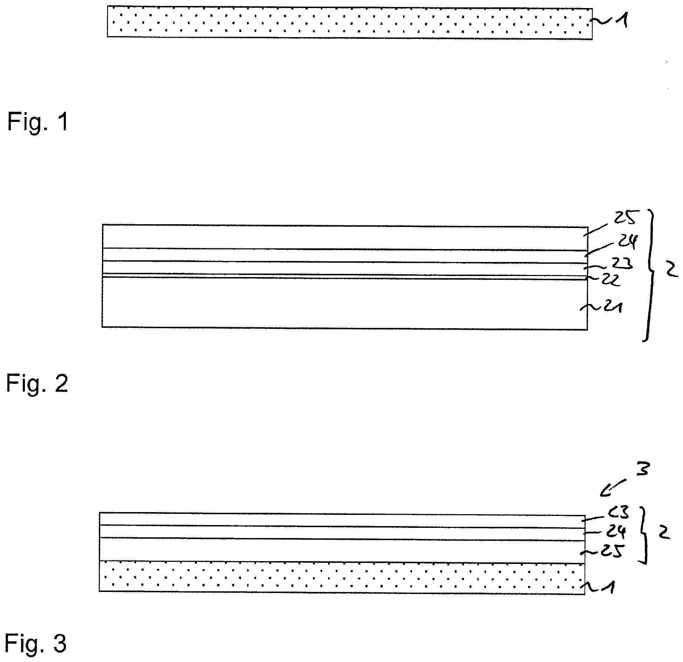

Neben dem Grundkörper 1 wird ferner eine Dekorfolie 2 bereitgestellt. Ein Ausführungsbeispiel einer solchen Dekorfolie ist in Fig. 2 gezeigt. Die Dekorfolie 2 umfasst eine Trägerlage 21, eine Ablöseschicht 22, eine Schutzschicht 23, eine Dekorlage 24 und eine Kleberschicht 25. Alle Schichten bis auf die Dekorlage 24 sind dabei optional.

Die Trägerlage 21 ist von der Dekorfolie ablösbar und besteht bevorzugt aus PET mit einer Schichtdicke im Bereich von 5 µm bis 250 µm, bevorzugt im Bereich von 12 µm bis 50 µm. Eine solche Trägerlage 21 bildet während der Verarbeitung der Dekorfolie 2 deren dem Grundkörper 1 abgewandte Oberfläche aus und schützt und stabilisiert die Dekorfolie 2 bei der Verarbeitung. Die Trägerlage 21 kann nach Fertigstellung des Kunststoffformkörpers oder auch erst nach dessen Einbau in seine Endmontagelage entfernt werden.

Um das Ablösen der Trägerlage 21 zu erleichtern, ist die Ablöseschicht 22 vorgesehen, die insbesondere aus Melamin, PE, Carnauba, PTFE oder Cellulose besteht und bevorzugt eine Schichtdicke im Bereich von 0,5 µm bis 3 µm aufweist.

Die Schutzschicht 23 ist bevorzugt als Klarlackschicht ausgebildet, insbesondere aus gegebenenfalls radikalisch vernetzten Bindemitteln, z.B. Acrylat, Melamin, Aziridin, Polyurethan, Polyester, Polycarbonat, Nitrocellulose oder einem Gemisch aus diesen.

Eine solche Klarlackschicht bildet im fertigen Kunststoffformkörper bevorzugt eine äußere Oberfläche aus und dient damit der Versiegelung der Dekorfolie 2 nach außen, so dass diese beispielsweise vor mechanischen oder chemischen Einflüssen geschützt wird.

Vorzugsweise weist dabei die Schutzschicht 23 eine Schichtdicke im Bereich von 3 µm bis 10 µm auf.

Die Dekorlage 24 bildet die eigentliche Dekoration für den Kunststoffformkörper aus. Sie kann dabei ein- oder mehrschichtig aufgebaut sein.

Bevorzugt umfasst die Dekorlage 24 zumindest eine Lackschicht, insbesondere gegebenenfalls enthaltend radikalisch vernetzten Bindemitteln, z.B. Acrylat, Aziridin, Polyurethan, Polyester, Polycarbonat, Nitrocellulose oder einem Gemisch aus diesen. Eine solche Lackschicht stellt die einfachste Möglichkeit dar, ein Dekor zu verwirklichen.

In einer besonders einfachen Ausführungsform kann diese Lackschicht selbst als Kleberschicht dienen, also die Verbindung mit dem Grundkörper 1 bei dessen Erwärmung herstellen. Die Lackschicht der Dekorfolie 2 wäre in diesem Fall also nur einschichtig
Vorzugsweise weist dabei die zumindest eine Lackschicht eine Schichtdicke im Bereich von 2 µm bis 15 µm auf.

In einer weiteren bevorzugten Ausführungsform umfasst die Dekorlage 24 zumindest eine Grundierungsschicht, insbesondere aus gegebenenfalls radikalisch vernetzten Bindemitteln, z.B. Acrylat, PVC, chloriertem Polyolefin oder einem Gemisch aus diesen.

Die Grundierungsschicht liegt dabei vorzugsweise zwischen der Lackschicht und dem Grundkörper 1. Hierdurch kann beispielsweise ermöglicht werden, Lackschichten aufzubringen, deren Materialien nicht mit dem Material des Grundkörpers 1 kompatibel sind.

Bevorzugt weist die zumindest eine Grundierungsschicht eine Schichtdicke im Bereich von 1 µm bis 4 µm auf.

Es ist weiter bevorzugt, wenn die zumindest eine Grundierungsschicht und/oder die zumindest eine Lackschicht Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel umfasst.

Hierdurch können vielfältige Dekore verwirklicht werden. Die Farbmittel müssen dabei nicht homogen in der jeweiligen Schicht vorhanden sein, sondern können über deren flächige Erstreckung auch variieren und so Motive ausbilden. Dabei können sich die Farbmittel der Lackschicht und Grundierungsschicht auch ergänzen, so dass komplexe Designs verwirklicht werden können.

Dabei ist es bevorzugt, wenn die zumindest eine Lackschicht und/oder die zumindest eine Grundierungsschicht eine Pigmentierung im Bereich von 5% bis 40% aufweist.

Weiterhin ist es zweckmäßig, wenn die Dekorlage 24 zumindest eine Replizierschicht, insbesondere aus einem Acrylat umfasst, in die ein Oberflächenrelief eingebracht ist.

Durch Replizierschichten mit solchen Reliefstrukturen können vielfältige optische, insbesondere optisch variable, Effekte, aber auch funktionelle Effekte wie zum Beispiel taktile bzw. haptische Eigenschaften oder auch Flüssigkeiten annehmende oder abstoßende Eigenschaften verwirklicht werden.

Bevorzugt weist dabei die zumindest eine Replizierschicht eine Schichtdicke im Bereich von 0,3 µm bis 3 µm, bevorzugt im Bereich von 0,5 µm bis 1,5 µm auf.

Es ist dabei insbesondere zweckmäßig, wenn das Oberflächenrelief der zumindest einen Replizierschicht zumindest ein optisch variables Element, insbesondere ein Hologramm, Kinegram^{®} oder Trustseal^{®}, ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope, Mattstruktur, oder eine lichtbeugende und/oder lichtbrechende und/oder lichtfokussierende Mikro- oder Nanostruktur, eine binäre oder kontinuierliche Fresnelllinse, eine binäre oder kontinuierliche Fresnel-Freiformfläche, eine Mikroprismenstruktur oder eine Kombinationsstruktur daraus ausbildet.

Hierdurch können vielfältige ansprechende Designs verwirklicht werden, die zudem schwer nachzuahmen sind.

In einer weiteren bevorzugten Ausführungsform umfasst die Dekorlage 24 zumindest eine Reflexionsschicht, insbesondere aus einem Metall, bevorzugt aus Aluminium, Silber, Gold, Chrom oder einer Legierung daraus, und/oder aus einem Material mit hohem Brechungsindex, insbesondere aus ZnS oder TiO₂.

Derartige Schichten können auch partiell vorliegen und damit selbst Muster oder Motive ausbilden. Ferner kann eine Reflexionsschicht auch zur Sichtbarmachung, bzw. Kontrastverbesserung von diffraktiven oder refraktiven Reliefstrukturen in einer Replizierschicht dienen.

Es ist dabei zweckmäßig, wenn die zumindest eine Reflexionsschicht eine Schichtdicke im Bereich von 10 nm bis 200 nm, bevorzugt im Bereich von 10 nm bis 50 nm, besonders bevorzugt im Bereich von 15 nm bis 35 nm, aufweist.

Ferner ist es bevorzugt, wenn die Dekorlage 24 zumindest eine Funktionsschicht, insbesondere eine elektrische Funktionsschicht aufweist. Dabei kann es sich beispielsweise um Funktionsschichten handeln, die elektrische Schaltkreise wie Antennenstrukturen, Koppelflächen, LED-basierte Anzeigeelemente, Touchsensorik-Funktionen, Abschirmungen gegen elektromagnetische Felder oder dergleichen ausbilden. Neben einem ansprechenden Design können so auch funktionale Elemente integriert werden, so dass ein derartiges Kunststoffformteil beispielsweise auch als Bedienfläche für ein Gerät verwendet werden kann.

Die Kleberschicht 25 der Dekorfolie besteht insbesondere aus ABS, PC oder einer Kombination daraus und weist eine Schichtdicke im Bereich von 1 µm bis 5 µm auf.

Die Kleberschicht 25 dient der Verbindung der Dekorfolie 2 mit dem Grundkörper 1 und bildet daher vor dem Anbringen der Dekorfolie 2 am Grundkörper 1 eine Oberfläche der Dekorfolie 2 aus. Die Materialzusammensetzung der Kleberschicht 25 richtet sich dabei nach der Materialzusammensetzung des Grundkörpers 1, so dass beim Erhitzen bzw. Umformen eine feste Verbindung zwischen Dekorfolie 2 und Grundkörper 1 entstehen kann.

Nach dem Aufbringen der Dekorfolie 2 auf den Grundkörper 1 verbinden sich beide Teile fest über die Kleberschicht 25. Die Trägerlage 21 kann nun abgezogen werden, so dass sich das fertige Kunststoffformteil 3 gemäß Fig. 3 ergibt.

Das in Fig. 2 gezeigte Ausführungsbeispiel der Dekorfolie 2 ist dabei lediglich exemplarisch zu verstehen. Es sind auch andere Schichtabfolgen und Schichtzusammensetzungen möglich, insbesondere mehrschichtige Aufbauten sowie Aufbauten, bei denen einzelne Schichten nur partiell aufgebracht sind.

In einem alternativen Ausführungsbeispiel kann eine pigmentierte Lackschicht gleichzeitig die Funktion der Kleberschicht übernehmen. Eine separate Schutzschicht ist hier nicht vorgesehen. Daher ist eine solche Dekorfolie 2 nicht für alle Anwendungen ausreichend abriebfest.

Beispielsweise kann hierbei ein Lack auf der Basis von PVC, Acrylat (und Gemischen aus diesen) mit einer Schichtdicke im Bereich von 5 bis 15 µm und einer Pigmentierung im Bereich von 30% bis 75% verwendet werden. Bevorzugt wird eine solche Dekorfolie 2 auf Grundkörper 1 auf der Basis von ABS, ABS/PC, PC/ABS, PC, PP, PMMA, SAN, Polystyrol, TPO, TPU, POM oder PA aufgebracht.

In einer weiteren Ausführungsform kann eine erste Farbschicht aus Acrylat mit einer Schichtdicke von ca. 5 µm und einer Pigmentierung von ca. 40% mit einer zweiten Farbschicht aus Acrylat/PVC mit einer Schichtdicke von ca. 5 µm und einer Pigmentierung von ca. 50% kombiniert werden. Das bevorzugte Substratmaterial hierfür ist ABS.

Auf pigmentierte Schichten kann auch ganz verzichtet werden Eine transparente oder auch transluzente (ggf. transluzent eingefärbte) Schutzlackschicht 23 übernimmt hier gleichzeitig die Funktion der Kleberschicht. Eine separate Dekorlage 24 ist nicht vorgesehen. Der Grundkörper 1 wäre daher jeweils durch die Dekorfolie 2 hindurch sichtbar.

Bevorzugt ist hier eine Schutzlackschicht 23 auf Basis von Acrylat oder Polyurethan (oder Gemischen aus diesen) mit einer Schichtdicke im Bereich von 3 µm bis 10 µm. Das bevorzugte Substratmaterial, also die Kunststoffmatrix des Grundkörpers, ist hier ABS, ABS/PC, PC/ABS, PC, PMMA, SAN, Polystyrol, TPO, TPU oder POM.

Eine transparente Schutzlackschicht 23 ist mit auch mindestens einer zusätzlichen Kleberschicht 25 kombinierbar. Bevorzugt ist dabei mindestens eine der Kleberschichten 25 (ggf. transluzent) eingefärbt mit Pigmenten und/oder Farbstoffen und übernimmt gleichzeitig die Funktion der Dekorschicht.

Die Klarlackschicht 23 besteht hier aus gegebenenfalls radikalisch vernetzten Bindemitteln, z.B. Acrylat, Melamin, Aziridin, Polyurethan, Polyester, Polycarbonat, Nitrocellulose und Gemischen aus diesen, mit einer Schichtdicke im Bereich von 3 µm bis 10 µm und keiner Pigmentierung.

Eine zusätzliche Grundierung kann aus Acrylat, PVC, chloriertem Polyolefin (und Gemischen aus diesen) bestehen und weist bevorzugt eine Schichtdicke im Bereich von ca. 1 µm bis 4 µm und eine Pigmentierung im Bereich von 5% bis 35% auf.

Das bevorzugte Matrixmaterial ist hier ABS, ABS/PC, PC/ABS, PC, PP, PMMA, SAN, Polystyrol, TPO, TPU, POM oder PA.

In einem weiteren Ausführungsbeispiel besteht die Ablöseschicht 22 aus einem PE/Cellulose-Gemisch mit einer Schichtdicke von ca. 0,5 µm. Eine erste Klarlackschicht besteht aus UV-härtendem melaminvernetztem Acrylat mit einer Schichtdicke von ca. 5 µm. Eine zweite Klarlackschicht besteht aus UV-härtendem melaminvernetztem Acrylat mit einer Schichtdicke von ca. 1 µm. Ferner ist hier noch eine Grundierung aus PVC mit einer Schichtdicke von ca. 1 µm und einer Pigmentierung von ca. 15% vorgesehen. Das bevorzugte Substrat ist ABS/PC.

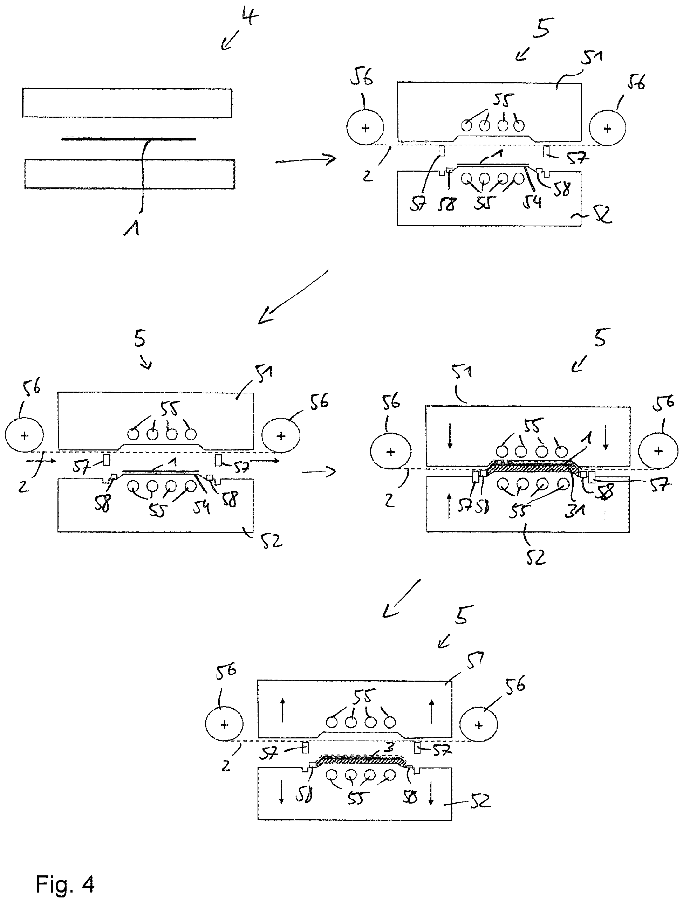

In Fig. 4 ist ein Ausführungsbeispiel eines Verfahrens zum Herstellen von beschichteten Kunststoffformkörpern 3 dargestellt.

Hierbei wird der Grundkörper 1 zunächst in einer Heizvorrichtung 4 aufgeheizt. Bevorzugt erfolgt dies durch Infrarotbestrahlung, Kontaktheizung, in einem Umluftofen oder innerhalb eines Formwerkzeugs 5 selbst. Hierdurch wird einfach und energieeffizient eine gleichmäßige Aufheizung des Grundkörpers 1 sichergestellt.

Dabei ist es bevorzugt, wenn der Grundkörper 1 auf eine Temperatur aufgeheizt wird, die um einen Bereich von 0°C bis 100°C, bevorzugt um einen Bereich von 10°C bis 50°C, größer ist als der Schmelzpunkt einer Kunststoffmatrix des Faserverbundkunststoffs. Dies ermöglicht eine zuverlässige Umformung des Grundkörpers im nachfolgenden Verfahrensschritt und ein gleichmäßiges Fließen der erweichten Kunststoffmatrix.

Weiter ist es dabei vorteilhaft, wenn der Grundkörper 1 auf eine Temperatur im Bereich von 100°C bis 300°C, bevorzugt im Bereich von 160°C bis 280°C, weiter bevorzugt im Bereich von 200°C bis 250°C aufgeheizt wird. Die genauen Temperaturen sind dabei nach der jeweiligen Kunststoffmatrix des Grundkörpers zu wählen.

Nach dem Aufheizen wird der Grundkörper 1 in das Formwerkzeug 5 überführt. Dies kann beispielsweise mittels eines Industrieroboters geschehen, der mit einem Greifer, einer Ansaugvorrichtung oder dergleichen als Manipulator versehen ist.

Das Formwerkzeug 5 umfasst zwei Werkzeughälften 51, 52, die gegeneinander beweglich sind. Die Werkzeughälften 51, 52 bilden Umformflächen 53, 54 aus, die die Endkontur des umgeformten Grundkörpers 1 definieren. Die Anordnung der Werkzeughälften 51, 52 mit ihren Umformflächen 53, 54 kann abweichend von Fig. 4 auch in umgekehrter Reihenfolge vorliegen. Ferner umfasst das Formwerkzeug Temperiermittelkanäle 55, mittels denen die Temperatur der Werkzeughälften eingestellt werden kann.

Mittels einer Transportvorrichtung 56 kann die Dekorfolie 2 in das Formwerkzeug 5 transportiert werden, wo sie mittels eines Klemmrahmens 57 oder auch durch Vakuumbeaufschlagung bevorzugt an der Werkzeughälfte 51 oder alternativ auch an der Werkzeughälfte 52 fixiert werden kann. Dichtungen 58 versiegeln dabei das Formwerkzeug 5 vakuumdicht.

Es ist dabei bevorzugt, wenn die Dekorfolie 2 im Formwerkzeug 5 anhand von Passermarken und/oder Stanzmarken positioniert wird. Hierdurch wird eine exakte Relativlage zwischen Dekorfolie 2 und Grundkörper 1 sichergestellt, so dass Ausschuss aufgrund von Fehlpositionierungen vermieden werden kann.

Nach dem Einlegen des Grundkörpers 1 und der Dekorfolie 2 werden der Grundkörper 1 und die Dekorfolie 2 durch hydraulische, pneumatische oder elektrische Druckbeaufschlagung zwischen den zwei Werkzeughälften 51, 52 des Formwerkzeugs 5 umgeformt. Hierdurch wird eine exakte Kontrolle von Druck und Umformgrad während des Umformvorgangs ermöglicht, so dass ein Kunststoffformkörper 3 mit hoher Material- und Oberflächenqualität erhalten wird.

Bei Nutzung eines Formwerkzeugs 5 mit horizontal orientierter Formtrennungsebene, das heißt vertikal beweglicher Werkzeughälften 51, 52 und Positionierung der Werkzeughälften 51 unten und der Werkzeughälfte 52 oberhalb darüber kann der Grundkörper 1 bei Führung der Dekorfolie 2 an der Werkzeughälfte 51 auch direkt auf der Werkzeughälfte 51 eingelegt bzw. aufgelegt werden. Die Dekorfolie 2 kann bei dieser Variante oberhalb des eingelegten Grundkörpers 1 zwischen dem Grundkörper 1 und der Werkzeughälfte 52 angeordnet sein.

Vorzugsweise wird das Formwerkzeug 5 während des Umformens über die Temperiermittelkanäle 55 temperiert. Dies vermeidet ein zu schnelles Abkühlen des Grundkörpers an der Oberfläche während des Umformens, welches zu schlechten Umformergebnissen führen könnte.

Dabei ist es bevorzugt, wenn das Formwerkzeug 5 während des Umformens isotherm auf eine Temperatur im Bereich von 40°C bis 180°C, bevorzugt im Bereich von 70°C bis 150°C, weiter bevorzugt im Bereich von 80°C bis 120°C temperiert wird.

Alternativ kann das Formwerkzeug 5 während des Umformens variotherm temperiert werden, insbesondere mit einer Temperaturführung von 0K bis 250K unter Schmelztemperatur des Polymers, mit einem Aufheizgradienten von 1K/s 30K/s.

Bei dieser Variante kann die Temperaturführung an den Umformprozess angepasst werden, so dass Verzüge oder eine Verschlechterung der Oberflächenqualität, beispielsweise durch ungleichmäßige Schrumpfung oder Ausdehnung des Werkstücks vermieden werden können.

Es ist ferner bevorzugt, wenn während des Umformens zumindest bereichsweise eine Oberflächenstruktur in den Grundkörper 1 und/oder die Dekorfolie 2 eingebracht wird.

Dies kann durch eine entsprechende Matrize im Formwerkzeug 5 erfolgen. Ist die Innenoberfläche einer der Werkzeughälften 51, 52 beispielsweise aus unpoliertem Werkzeugstahl ausgebildet, so kann eine mattierte Oberfläche erzeugt werden. Auch andere Strukturen, wie beispielsweise taktil wahrnehmbare Reliefs oder dergleichen, können durch ein Formwerkzeug 5 mit der entsprechenden Negativstruktur in der Umformfläche erzeugt werden.

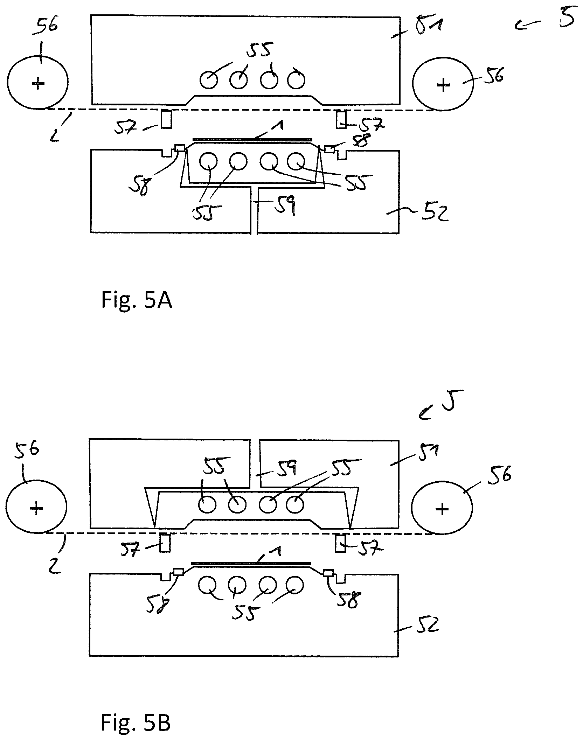

Nach dem Umformen kann ferner noch eine Kunststoffstruktur 31 an das Kunststoffformteil 3 vollflächig hinterspritzt oder partiell angespritzt oder den Randbereich versiegelnd umspritzt werden. Hierfür umfasst das Formwerkzeug ein Angusssystem 59, welches in Fig. 4 nicht gezeigt ist. Beispiele für die Gestaltung des Angusssystems sind in den Figuren 5Aund 5B dargestellt.

Wie Fig. 5A zeigt, kann der Angusskanal 592 in der unteren Werkzeughälfte 52 angeordnet sein, in welcher der Grundkörper 1 eingelegt ist. Alternativ kann, wie in Fig. 5B dargestellt, der Angusskanal 592 auch in der oberen Werkzeughälfte 51 angeordnet sein, an welcher die Dekorfolie 2 anliegt.

In beiden Fällen wird hierbei schmelzflüssige Kunststoffmasse durch den Angusskanal 592 in eine Kavität 593 des Formwerkzeugs geleitet, wo sie in Kontakt mit dem Kunststoffformkörper 3 erstarrt.

Hierdurch können zusätzliche Strukturelemente 31 verwirklicht werden, die durch das Umformen allein nicht erzeugt werden können. Ferner ist es so möglich, Kantenbereiche des Grundkörpers 1 zu umspritzen, so dass überstehende Kunststofffasern von der Kunststoffstruktur 31 eingeschlossen werden können. Hierdurch wird ein Kunststoffformkörper mit besonders glatten Kanten bereitgestellt.

Bevorzugt wird zum Spritzgießen dabei PC, PP, TPU, PA oder eine Mischung daraus verwendet. Die Wahl des angespritzten Kunststoffs richtet sich insbesondere nach dem Material der Kunststoffmatrix des Grundkörpers. Es ist dabei zweckmäßig, wenn die zumindest eine Kunststoffstruktur 31 aus dem gleichen Kunststoff besteht wie die Kunststoffmatrix des Grundkörpers 1.

Alternativ kann ein Thermoplast eingesetzt werden, der dazu geeignet ist, eine haftfeste Verbindung mit zumindest einem der im Grundkörper 1 enthaltenen Thermoplasten einzugehen.

Hierdurch kann eine feste Verbindung zwischen der Kunststoffstruktur 31 und dem Grundkörper 1 sichergestellt werden. Es kann sich in einer weiteren Alternative von Vorteil erweisen, wenn die Kunststoffstruktur 31 mit mindestens zwei Kunststoffen, vorzugsweise Thermoplasten, mittels Spritzgussverfahren durch Kombination der vorgenannten Techniken Hinterspritzen, Anspritzen und Umspritzen, beispielsweise zur Realisierung einer unterschiedlichen Einfärbung bestimmter Bereiche des Kunststoffformkörpers 3 oder zur Integration zusätzlicher Dichtelemente am Kunststoffformkörper 3 erstellt wird.

Es ist dabei bevorzugt, wenn das Spritzgießen bei einer Temperatur im Bereich von 200°C bis 320°C, bevorzugt im Bereich von 240°C bis 290°C, weiter bevorzugt im Bereich von 240°C bis 270°C, erfolgt. Ferner ist es vorteilhaft, wenn das Spritzgießen bei einem Druck im Bereich von 10 bar bis 2000 bar, bevorzugt im Bereich von 200 bar bis 1500 bar, weiter bevorzugt im Bereich von 500 bar bis 1300 bar, erfolgt.

Druck und Temperatur des Spritzgussvorgangs richten sich dabei nach der Art der verwendeten Kunststoffmasse, sowie nach der Geometrie der zu erzeugenden Kunststoffstruktur 31.

Es ist ferner bevorzugt, wenn der Kunststoffformkörper 3 nach dem Umformen und/oder nach dem Spritzgießen auf eine Temperatur im Bereich von 150°C bis 0°C abgekühlt wird, insbesondere mit einer Abkühlrate von 1 K/s bis 30 K/s.

Hierdurch wird eine kontrollierte Erstarrung der angespritzten Kunststoffstruktur 31 bzw. des gesamten Kunststoffformkörpers 3 erzielt, so dass Verzüge oder dergleichen beim Abkühlen vermieden werden.

Weiterhin ist es bevorzugt, wenn das Material der zumindest einen Kunststoffstruktur 31 Zuschlagstoffe, insbesondere Glas-, Carbon- oder Naturfasern, Kupfer, Aluminiumoxid, Graphit, Mittel zur Verbesserung der Fließfähigkeit, UV-Stabilisatoren, Flammschutzmittel, Schaumbildner, Mittel zur Ableitung statischer Aufladung oder zur Ausbildung elektrischer Leitfähigkeitspfade enthält. Solche Zuschlagstoffe können der Kunststoffstruktur 31 zusätzliche visuelle, mechanische, chemische oder funktionale Eigenschaften verleihen.

Ferner ist es zweckmäßig, wenn das Material der zumindest einen Kunststoffstruktur 31 Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel, umfasst. Damit kann die Kunststoffstruktur 31 auch optisch an das Design des restlichen Kunststoffformkörpers 3 angepasst werden.

Es ist weiter bevorzugt, wenn die zumindest eine Kunststoffstruktur 31 einen Kantenbereich des Grundkörpers 1 umschließt. Hierdurch können überstehende Fasern des Grundkörpers 1 in der Kunststoffstruktur 31 eingeschlossen werden, so dass sich eine glatte, optisch und taktil ansprechende Kante des Kunststoffformkörpers 3 ergibt.

Weiterhin ist es bevorzugt, wenn die zumindest eine Kunststoffstruktur 31 Verstärkungselemente, insbesondere Rippenkörper oder Dome, und/oder Befestigungselemente, insbesondere Clipse, Rasthaken, Schnapphaken, Konsolen, Schrauböffnungen, Rastöffnungen, Federn, Nuten oder dergleichen, umfasst.

Dies ermöglicht die Verbindung des Kunststoffformkörpers 3 mit weiteren Bauteilen, ohne dass separate Befestigungsmittel notwendig sind und/oder trägt weiter zur mechanischen Stabilisierung des Kunststoffformkörpers 3 bei.

Nach dem Abkühlen der angespritzten Kunststoffstruktur 31 wird der fertige Kunststoffformkörper 3 schließlich entformt. Um ein problemloses Entformen zu ermöglichen, ist es zweckmäßig, wenn Entformungsschrägen des Formwerkzeugs 5 im Bereich der Umformflächen 53, 54 einen Winkel von mehr als 2° aufweisen. Es ist dabei auch zweckmäßig, wenn Innenradien des Formwerkzeugs 5 im Bereich der Umformflächen 53, 54 größer als eine Dicke des Grundkörpers sind. Ferner sind die Außenradien des Formwerkzeugs 5 im Bereich der Umformflächen 53, 54 bevorzugt größer als die Summe der Innenradien des Formwerkzeugs 5 im Bereich der Umformflächen 53, 54 und der Dicke des Grundkörpers 1.

Es ist ebenfalls vorteilhaft, wenn die Entformungsschrägen des Formwerkzeugs 5 im Bereich der Kavität 593 einen Winkel von mehr als 0,5° aufweisen.

Durch diese geometrischen Parameter wird ein problemloses Entformen des fertigen Kunststoffformkörpers ermöglicht.

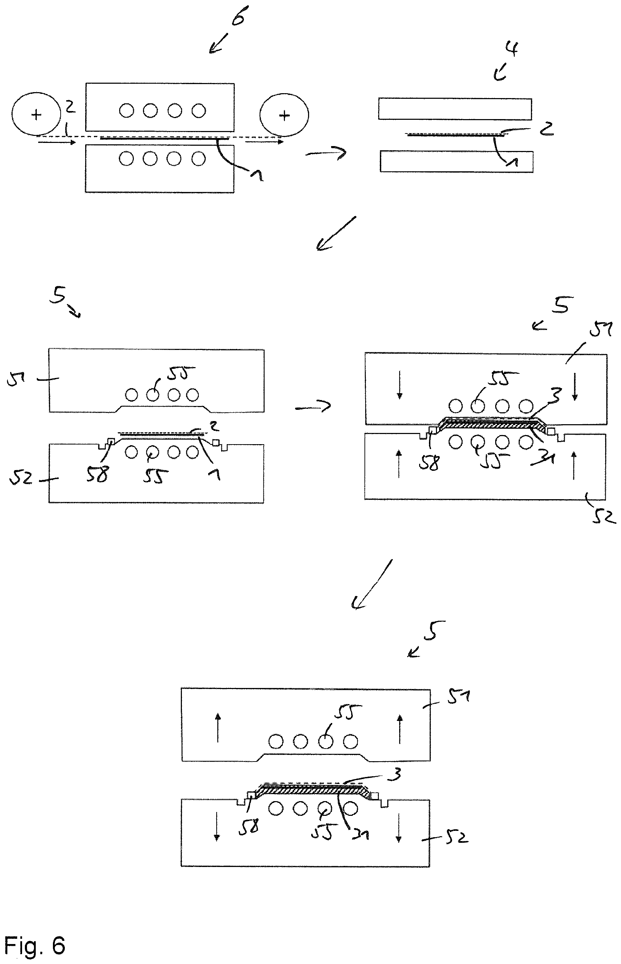

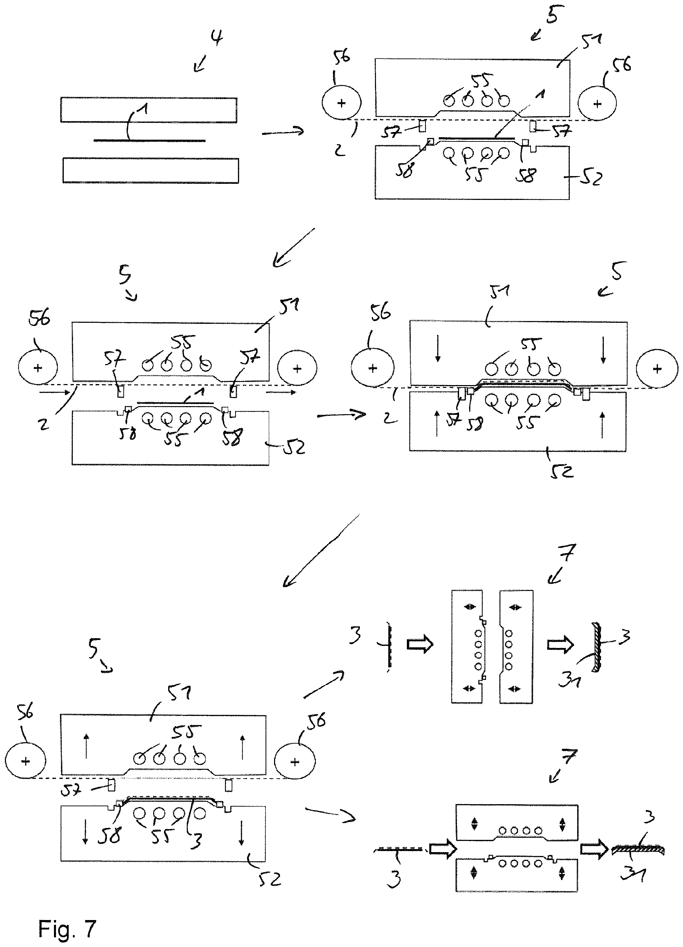

In den Figuren 6 und 7 sind zwei alternative Ausführungsbeispiele für ein Verfahren zum Herstellen eines Kunststoffformkörpers 3 dargestellt.

Das Ausführungsbeispiel nach Fig. 6 unterscheidet sich von dem oben erläuterten Ausführungsbeispiel lediglich dadurch, dass die Dekorfolie 2 bereits vor dem Umformen in einem separaten Werkzeug 6 mit dem Grundkörper 1 verbunden wird. Dies kann insbesondere durch Abrollprägen, Kalandrieren oder Pressen erfolgen.

Dies ist insbesondere vorteilhaft, wenn die Dekorfolie 2 zunächst auf die gewünschte Form zugestanzt wird. Erfolgt das Aufbringen der Dekorfolie 2 auf den Grundkörper 1 vor dem Aufheizen, so kann der Aufheizschritt zudem genutzt werden, eine feste Verbindung zwischen der Dekorfolie 2 und dem Grundkörper 1 herzustellen. Bei einer derart vorfixierten Dekorfolie 2 kann dann auf separate Halteelemente für die Dekorfolie 2 im Formwerkzeug 5 verzichtet werden, so dass sich die Handhabung von Dekorfolie 2 und Grundkörper 1 vereinfacht.

Das Ausführungsbeispiel nach Fig. 7 unterscheidet sich von dem Ausführungsbeispiel nach Fig. 4 nur dadurch, dass das Spritzgießen der Kunststoffstruktur 31 nicht im Formwerkzeug 5 erfolgt. Vielmehr wird der umgeformte Kunststoffformkörper 3 aus dem Formwerkzeug 5 entnommen und in ein separates Spritzgusswerkzeug 7 überführt, wo die Kunststoffstruktur 31 auf die beschriebene Art und Weise angespritzt wird. Dabei kann es sich um ein horizontales oder ein vertikales Werkzeug handeln.

### Bezugszeichenliste

- 1: Grundkörper
- 2: Dekorfolie
- 21: Trägerlage
- 22: Ablöseschicht
- 23: Schutzschicht
- 24: Dekorlage
- 25: Kleberschicht
- 3: Kunststoffformkörper
- 31: Kunststoffstruktur
- 4: Heizvorrichtung
- 5: Formwerkzeug
- 51: Werkzeughälfte
- 52: Werkzeughälfte
- 53: Umformfläche
- 54: Umformfläche
- 55: Temperierkanal
- 56: Fördervorrichtung
- 57: Klemmvorrichtung
- 58: Dichtung
- 59: Angusssystem
- 591: Element
- 592: Angusskanal
- 593: Kavität
- 6: Werkzeug
- 7: Spritzgusswerkzeug

## Patentansprüche

1. Verfahren zum Herstellen eines Kunststoffformkörpers (3) mit den Schritten:
a) Bereitstellen wenigstens eines Grundkörpers (1) aus einem Faserverbundkunststoff, wobei der wenigstens eine Grundkörper (1) zumindest eine Flächengebildelage aus Endlosfasern und/oder Langfasern und/oder Kurzfasern in einer thermoplastischen Kunststoffmatrix aufweist;
b) Bereitstellen wenigstens einer Dekorfolie (2), wobei die Dekorfolie (2) eine ablösbare Trägerlage (21) umfasst und ein Trockenlacksystem mit wenigstens einer Lackschicht ist, das zuvor auf die Trägerlage (21) appliziert wird; wobei die zumindest eine Lackschicht eine Schichtdicke von 2 µm bis 15 µm aufweist und Bindemittel aus der Gruppe Acrylat, Aziridin, Polyurethan, Polyester, Polycarbonat, Nitrocellulose oder einem Gemisch aus diesen umfasst;
c) Aufheizen des wenigstens einen Grundkörpers (1) auf eine Temperatur, die um 0°C bis 100°C größer ist als ein Schmelzpunkt oder eine Glasübergangstemperatur einer Kunststoffmatrix des Faserverbundkunststoffs;
d) Verbinden wenigstens eines Bereichs des wenigstens einen Grundkörpers (1) mit der wenigstens einen Dekorfolie (2) in einem Formwerkzeug (5), wobei
in Schritt d) ein Umformen des Grundkörpers (1) mit der Dekorfolie (2) in dem Formwerkzeug (5) vorgesehen ist, und nach dem Umformen die Trägerlage (21) von der Dekorfolie (2) abgezogen wird und
e) zumindest eine Kunststoffstruktur (31) an den Kunststoffformkörper (3) durch Spritzgießen vollflächig, partiell oder umlaufend angeformt wird und Kantenbereiche des wenigstens einen Grundkörpers (1) umspritzt werden, so dass freiliegende oder erst durch das Umformen freigelegte anorganische oder organische Verstärkungsfasern von der Kunststoffstruktur (31) eingeschlossen werden;
wobei die Trägerlage (21) während der Verarbeitung der Dekorfolie deren dem Grundkörper (1) abgewandte Oberfläche ausbildet und die Dekorfolie (2) bei der Verarbeitung schützt und stabilisiert.

2. Verfahren nach Anspruch 1,
**dadurch gekennzeichnet,**
**dass** die Dekorfolie (2) als Rollenware bereitgestellt wird, insbesondere
**dass** die Dekorfolie (2) vor dem Umformen zugestanzt oder zugeschnitten wird, oder
**dass** die Dekorfolie (2) im Formwerkzeug (5) zugestanzt wird.

3. Verfahren nach einem der vorhergehenden Ansprüche,
**dadurch gekennzeichnet,**
**dass** der Grundkörper (1) als plattenförmiges Halbzeug bereitgestellt wird und/oder dass der Grundkörper (1) durch Infrarotbestrahlung, Kontaktheizung, in einem Umluftofen oder innerhalb des Formwerkzeugs (5) aufgeheizt wird und/oder dass der Grundkörper (1) auf eine Temperatur von 100°C bis 300°C, bevorzugt zwischen 160°C und 280°C, weiter bevorzugt zwischen 200°C und 250°C aufgeheizt wird.

4. Verfahren nach einem der vorhergehenden Ansprüche,
**dadurch gekennzeichnet,**
**dass** das Formwerkzeug (5) temperiert wird, und/oder
**dass** das Formwerkzeug (5) isotherm auf eine Temperatur von 40°C bis 180°C, bevorzugt von 70°C bis 150°C, weiter bevorzugt von 80°C bis 120°C beheizt wird, und/oder
**dass** das Formwerkzeug (5) variotherm temperiert wird, insbesondere mit einer Temperaturführung zwischen 0K und 250K unterhalb der Schmelztemperatur eines verwendeten Polymers, mit einem Aufheiz- oder Abkühlgradienten von 1K/s bis 30K/s.

5. Verfahren nach einem der vorhergehenden Ansprüche,
**dadurch gekennzeichnet,**
**dass** die Dekorfolie (2) im Formwerkzeug (5) anhand von Passermarken und/oder Stanzmarken positioniert wird, und/oder
**dass** der Grundkörper (1) und/oder die Dekorfolie (2) durch Klemmeinrichtungen und/oder Vakuum im Formwerkzeug fixiert werden.

6. Verfahren nach einem der vorhergehenden Ansprüche,
**dadurch gekennzeichnet,**
**dass** während des Umformens zumindest bereichsweise eine Oberflächenstruktur in den Grundkörper (1) und/oder in die Kunststoffstruktur (31) und/oder in die Dekorfolie (2) eingebracht wird.

7. Verfahren nach Anspruch 6,
**dadurch gekennzeichnet,**
**dass** das Anformen bei einer Temperatur von 200°C bis 320°C, bevorzugt von 240°C bis 290°C, weiter bevorzugt von 240°C bis 270°C, erfolgt, und/oder
**dass** das Anformen bei einem Druck von 10 bar bis 2000 bar, bevorzugt von 200 bar bis 1500 bar, weiter bevorzugt von 500 bar bis 1300 bar, erfolgt, und/oder
**dass** das Anformen im Formwerkzeug (5) erfolgt, oder
**dass** das Anformen in einem separaten Spritzgusswerkzeug (7) erfolgt.

8. Verfahren nach einem der vorhergehenden Ansprüche,
**dadurch gekennzeichnet,**
**dass** eine Dekorfolie (2) mit einer Trägerlage aus PET mit einer Dicke von 5 µm bis 250 µm, bevorzugt von 12 µm bis 50 µm, verwendet wird.

9. Kunststoffformkörper (3), insbesondere erhältlich mittels eines Verfahrens nach einem der Ansprüche 1 bis 8, mit wenigstens einem Grundkörper (1) aus einem Faserverbundkunststoff, wobei der wenigstens eine Grundkörper (1) zumindest eine Flächengebildelage aus Endlosfasern und/oder Langfasern und/oder Kurzfasern in einer thermoplastischen Kunststoffmatrix aufweist und wenigstens einer Dekorfolie (2), welche zumindest einen Oberflächenbereich des Kunststoffformkörpers (3) bildet und ein Trockenlacksystem mit wenigstens einer Lackschicht ist, das zuvor auf eine Trägerlage (21) appliziert wurde; wobei die zumindest eine Lackschicht eine Schichtdicke von 2 µm bis 15 µm aufweist und Bindemittel aus der Gruppe Acrylat, Aziridin, Polyurethan, Polyester, Polycarbonat, Nitrocellulose oder einem Gemisch aus diesen umfasst; und der Kunststoffformkörper (3) zumindest eine Kunststoffstruktur (31) aufweist, welche an den Kunststoffformkörper (3) durch Spritzgießen vollflächig, partiell oder umlaufend angeformt ist und Kantenbereiche des wenigstens einen Grundkörpers (1) umspritzt sind, so dass freiliegende oder erst durch das Umformen freigelegte anorganische oder organische Verstärkungsfasern von der Kunststoffstruktur (31) eingeschlossen sind.

10. Kunststoffformkörper nach Anspruch 9,
**dadurch gekennzeichnet,**
**dass** die zumindest eine Flächengebildelage ein Flächengewicht von 5 g/m² bis 3000 g/m², bevorzugt von 100 g/m² bis 900 g/m², besonders bevorzugt von 150 g/m² bis 400 g/m² aufweist, und/oder
**dass** der Grundkörper (1) maximal 100 Flächengebildelagen, bevorzugt 2 bis 40 Flächengebildelagen, besonders bevorzugt 2 bis 10 Flächengebildelagen, aufweist, und/oder
**dass** der Grundkörper (1) zumindest eine weitere Schicht, insbesondere eine faserfreie Kunststoffschicht und/oder eine elektrische Funktionsschicht umfasst.

11. Kunststoffformkörper nach einem der Ansprüche 9 bis 10,
**dadurch gekennzeichnet,**
**dass** die Dekorfolie (2) eine ablösbare Trägerlage (21), insbesondere aus PET umfasst, und/oder
**dass** die Dekorfolie (2) zumindest eine Ablöseschicht, insbesondere aus Melamin, PE, Carnauba, PTFE, Cellulose umfasst, und/oder dass die Dekorfolie (2) zumindest eine Replizierschicht, insbesondere aus Acrylat umfasst, in die ein Oberflächenrelief eingebracht ist.

12. Kunststoffformkörper nach einem der Ansprüche 9 bis 11,
**dadurch gekennzeichnet,**
**dass** die Dekorfolie (2) zumindest eine Reflexionsschicht, insbesondere aus einem Metall, bevorzugt aus Aluminium, Silber, Gold, Chrom oder einer Legierung daraus, und/oder aus einem Material mit hohem Brechungsindex, insbesondere aus ZnS oder TiO₂, umfasst, und/oder
**dass** die Dekorfolie (2) zumindest eine Funktionsschicht, insbesondere eine elektrische Funktionsschicht aufweist.

## Claims

1. Method for producing a plastic moulded body (3) having the steps:
a) providing at least one base body (1) made from a fibre-reinforced plastic, wherein the at least one base body (1) has at least one fabric layer made of continuous fibres and/or long fibres and/or short fibres in a thermoplastic plastics matrix;
b) providing at least one decorative film (2), wherein the decorative film (2) comprises a removable carrier layer (21), and is a drying lacquer system with at least one lacquer layer, which is applied to the carrier layer (21) beforehand; wherein the at least one lacquer layer has a layer thickness of 2 µm to 15 µm and comprises bonding agents from the group consisting of acrylate, aziridine, polyurethane, polyester, polycarbonate, nitrocellulose or a mixture of these;
c) heating up the at least one base body (1) to a temperature which is greater than a melting point or a glass transition temperature of a plastic matrix of the fibre-reinforced plastic by 0°C to 100°C;
d) connecting at least one region of the at least one base body (1) with the at least one decorative film (2) in a moulding tool (5), wherein
a reshaping of the base body (1) having the decorative film (2) in the moulding tool (5) is provided in step d), and after the reshaping, the carrier layer (21) is removed from the decorative film (2) and
e) at least one plastic structure (31) is moulded onto the plastic moulded body (3) across the whole surface, partially or around the circumference by means of injection moulding and edge regions of the at least one base body (1) are coated such that organic or inorganic reinforcing fibres that are exposed or are first exposed by the reshaping are enclosed by the plastic structure (31);
wherein the carrier layer (21) forms the surface of the decorative film facing away from the base body (1) during the processing of the decorative film and protects and stabilises the decorative film (2) during processing.

2. Method according to claim 1,
**characterised in that**
the decorative film (2) is provided as roll stock, in particular
**in that** the decorative film (2) is punched or cut before the reshaping, or
**in that** the decorative film (2) is punched in the moulding tool (5).

3. Method according to one of the preceding claims,
**characterised in that**
the base body (1) is provided as a plate-shaped preform and/or **in that** the base body (1) is heated by means of infrared radiation, contact heating, in a convection oven or inside the moulding tool (5) and/or **in that** the base body (1) is heated to a temperature of 100°C to 300°C, preferably between 160°C and 280°C, further preferably between 200°C and 250°C.

4. Method according to one of the preceding claims,
**characterised in that**
the moulding tool (5) is tempered, and/or
**in that** the moulding tool (5) is isothermally heated to a temperature of 40°C to 180°C, preferably of 70°C to 150°C, further preferably of 80°C to 120°C, and/or
**in that** the moulding tool (5) is variothermally tempered, in particular with a temperature control between 0K and 250K below the melting temperature of a polymer that is used, with a heating or cooling gradient of 1K/s to 30K/s.

5. Method according to one of the preceding claims,
**characterised in that**
the decorative film (2) is positioned in the moulding tool (5) using fiducial markers and/or
punching markers, and/or
**in that** the base body (1) and/or the decorative film (2) are fixed in the moulding tool by means of clamping devices and/or vacuum.

6. Method according to one of the preceding claims,
**characterised in that**
during the reshaping, a surface structure is introduced into the base body (1) and/or into the plastic structure (31) and/or into the decorative film (2), at least in places.

7. Method according to claim 6,
**characterised in that**
the moulding occurs at a temperature of from 200°C to 320°C, preferably of from 240°C to 290°C, further preferably of from 240°C to 270°C, and/or
**in that** the moulding occurs at a pressure of from 10 bar to 2000 bar, preferably of from 200 bar to 1500 bar, further preferably of from 500 bar to 1300 bar, and/or
**in that** the moulding occurs in the moulding tool (5), or
**in that** the moulding occurs in a separate injection moulding tool (7).

8. Method according to one of the preceding claims,
**characterised in that**
a decorative film (2) with a carrier layer made of PET with a thickness of 5 µm to 250 µm, preferably of 12 µm to 50 µm, is used.

9. Plastic moulded body (3), in particular that can be obtained by means of a method according to one of claims 1 to 8, having at least one base body (1) made from a fibre-reinforced plastic, wherein the at least one base body (1) has at least one fabric layer made of continuous fibres and/or long fibres and/or short fibres in a thermoplastic plastics matrix and at least one decorative film (2), which forms at least one surface region of the plastic moulded body (3) and is a drying lacquer system with at least one lacquer layer, which was applied to a carrier layer (21) beforehand; wherein the at least one lacquer layer has a layer thickness of 2 µm to 15 µm and comprises bonding agents from the group consisting of acrylate, aziridine, polyurethane, polyester, polycarbonate, nitrocellulose or a mixture of these; and the plastic moulded body (3) has at least one plastic structure (31), which is moulded onto the plastic moulded body (3) across the whole surface, partially or around the circumference by means of injection moulding, and edge regions of the at least one base body (1) are coated such that organic or inorganic reinforcing fibres that are exposed or are first exposed by the reshaping are enclosed by the plastic structure (31).

10. Plastic moulded body according to claim 9,
**characterised in that**
the at least one textile fabric layer has a weight per unit area of from 5 g/m² to 3000 g/m², preferably of from 100 g/m² to 900 g/m², especially preferably of from 150 g/m² to 400 g/m², and/or
**in that** the base body (1) has a maximum of 100 textile fabric layers, preferably 2 to 40 textile fabric layers, especially preferably 2 to 10 textile fabric layers, and/or
**in that** the base body (1) comprises at least one further layer, in particular a fibre-free plastic layer and/or an electrical functional layer.

11. Plastic moulded body according to one of claims 9 to 10,
**characterised in that**
the decorative film (2) comprises a removable carrier layer (21), in particular made of PET, and/or
**in that** the decorative film (2) comprises at least one release layer, in particular made of melamine, PE, carnauba, PTFE, cellulose, and/or
**in that** the decorative film (2) comprises at least one replication layer, in particular made of acrylate, into which a surface relief is introduced.

12. Plastic moulded body according to one of claims 9 to 11,
**characterised in that**
the decorative film (2) comprises at least one reflective layer, in particular made from a metal, preferably from aluminium, silver, gold, chromium or an alloy of these, and/or from a material with a high refractive index, in particular made of ZnS or TiO₂, and/or
**in that** the decorative film (2) has at least one functional layer, in particular an electrical functional layer.

## Revendications

1. Procédé pour la fabrication d'un corps moulé en matière plastique (3) avec les étapes :
a) de fourniture d'au moins un corps de base (1) composé d'une matière plastique renforcée par des fibres, dans lequel le au moins un corps de base (1) présente au moins une couche à structure plane composée de fibres continues et/ou fibres longues et/ou fibres courtes dans une matrice plastique thermoplastique ;
b) de fourniture d'au moins un film décoratif (2), dans lequel le film décoratif (2) comprend une couche de support (21) détachable et est un système de vernis sec avec au moins une couche de vernis, qui est appliquée préalablement sur la couche de support (21) ; dans lequel la au moins une couche de vernis présente une épaisseur de couche de 2 µm à 15 µm et comprend des liants provenant du groupe acrylate, aziridine, polyuréthane, polyester, polycarbonate, nitrocellulose ou d'un mélange de ceux-ci ;
c) de chauffage du au moins un corps de base (1) à une température qui est supérieure de 0 °C à 100 °C à un point de fusion ou une température de transition vitreuse d'une matrice plastique de la matière plastique renforcée par des fibres ;
d) de liaison d'au moins une zone du au moins un corps de base (1) avec le au moins un film décoratif (2) dans un moule (5), dans lequel
dans l'étape d) un façonnage du corps de base (1) avec le film décoratif (2) dans le moule (5) est prévu, et après le façonnage la couche de support (21) est retirée du film décoratif (2) et
e) au moins une structure plastique (31) est conformée entièrement, partiellement ou de manière périphérique sur le corps moulé en matière plastique (3) par moulage par injection et des zones de bord du au moins un corps de base (1) sont surmoulées, de sorte que des fibres de renforcement inorganiques ou organiques à nu ou mises à nu uniquement par le façonnage sont renfermées par la structure plastique (31) ;
dans lequel la couche de support (21) pendant le traitement du film décoratif réalise la surface opposée au corps de base (1) de celui-ci et protège et stabilise le film décoratif (2) lors du traitement.

2. Procédé selon la revendication 1,
**caractérisé en ce**
**que** le film décoratif (2) est fourni en tant que rouleaux, en particulier
**que** le film décoratif (2) est découpé à dimension ou coupé à dimension avant le façonnage, ou
**que** le film décoratif (2) est découpé à dimension dans le moule (5).

3. Procédé selon l'une quelconque des revendications précédentes,
**caractérisé en ce**
**que** le corps de base (1) est fourni en tant que demi-produit en forme de plaque et/ou que le corps de base (1) est chauffé par rayonnement infrarouge, chauffage par contact, dans un four à convection ou à l'intérieur du moule (5) et/ou que le corps de base (1) est chauffé à une température de 100 °C à 300 °C, de préférence entre 160 C et 280 C, plus préférablement entre 200 C et 250 C.

4. Procédé selon l'une quelconque des revendications précédentes,
**caractérisé en ce**
**que** le moule (5) est thermorégulé, et/ou
**que** le moule (5) est chauffé de manière isotherme à une température de 40 C à 180 C, de préférence de 70 C à 150 C, plus préférablement de 80 C à 120 C, et/ou
**que** le moule (5) est thermorégulé de manière variotherme, en particulier avec un contrôle de température entre 0 K et 250 K au-dessous de la température de fusion d'un polymère utilisé, avec un gradient de chauffage ou de refroidissement de 1 K/s à 30 K/s.

5. Procédé selon l'une quelconque des revendications précédentes,
**caractérisé en ce**
**que** le film décoratif (2) est positionné dans le moule (5) à l'aide de marques de repérage et/ou marques de découpage, et/ou
**que** le-corps de base (1) et/ou le film décoratif (2) sont fixés dans le moule au moyen de systèmes de serrage et/ou d'un vide.

6. Procédé selon l'une quelconque des revendications précédentes,
**caractérisé en ce**
**que** pendant le façonnage une structure de surface est introduite au moins par endroits dans le corps de base (1) et/ou dans la structure plastique (31) et/ou dans le film décoratif (2).

7. Procédé selon la revendication 6,
**caractérisé en ce**
**que** le conformage s'effectue à une température de 200 C à 320 C, de préférence de 240 C à 290 C, plus préférablement de 240 C à 270 C, et/ou
**que** le conformage s'effectue à une pression de 10 bar à 2000 bar, de préférence de 200 bar à 1500 bar, plus préférablement de 500 bar à 1300 bar, et/ou
**que** le conformage s'effectue dans le moule (5), ou
**que** le conformage s'effectue dans un moule à injection (7) séparé.

8. Procédé selon l'une quelconque des revendications précédentes,
**caractérisé en ce**
**qu'**un film décoratif (2) avec une couche de support composée de PET avec une épaisseur de 5 µm à 250 µm, de préférence de 12 µm à 50 µm, est utilisé.

9. Corps moulé en matière plastique (3), en particulier pouvant être obtenu au moyen d'un procédé selon l'une quelconque des revendications 1 à 8, avec au moins un corps de base (1) composé d'une matière plastique renforcée par des fibres, dans lequel le au moins un corps de base (1) présente au moins une couche à structure plane composée de fibres continues et/ou fibres longues et/ou fibres courtes dans une matrice plastique thermoplastique et au moins un film décoratif (2), lequel forme au moins une zone de surface du corps moulé en matière plastique (3) et est un système de vernis sec avec au moins une couche de vernis, qui a été appliquée préalablement sur une couche de support (21) ; dans lequel la au moins une couche de vernis présente une épaisseur de couche de 2 µm à 15 µm et comprend des liants provenant du groupe acrylate, aziridine, polyuréthane, polyester, polycarbonate, nitrocellulose ou d'un mélange de ceux-ci ; et le corps moulé en matière plastique (3) présente au moins une structure plastique (31), laquelle est conformée entièrement, partiellement ou de manière périphérique sur le corps moulé en matière plastique (3) par moulage par injection et des zones de bord du au moins un corps de base (1) sont surmoulées, de sorte que des fibres de renforcement inorganiques ou organiques à nu ou seulement mises à nu par le façonnage sont renfermées par la structure plastique (31).

10. Corps moulé en matière plastique selon la revendication 9,
**caractérisé en ce**
**que** la au moins une couche à structure plane présente une masse surfacique de 5 g/m² à 3000 g/m², de préférence de 100 g/m² à 900 g/m², de manière particulièrement préférée de 150 g/m² à 400 g/m², et/ou
**que** le corps de base (1) présente au maximum 100 couches à surface plane, de préférence 2 à 40 couches à surface plane, de manière particulièrement préférée 2 à 10 couches à surface plane, et/ou
**que** le corps de base (1) comprend au moins une autre couche, en particulier une couche de matière plastique exempte de fibres et/ou une couche fonctionnelle électrique.

11. Corps moulé en matière plastique selon l'une quelconque des revendications 9 à 10,
**caractérisé en ce**
**que** le film décoratif (2) comprend une couche de support (21) détachable, en particulier composée de PET, et/ou
**que** le film décoratif (2) comprend au moins une couche détachable, en particulier composée de mélamine, PE, carnauba, PTFE, cellulose, et/ou
**que** le film décoratif (2) comprend au moins une couche de reproduction, en particulier composée d'acrylate, dans laquelle un relief de surface est introduit.

12. Corps moulé en matière plastique selon l'une quelconque des revendications 9 à 11,
**caractérisé en ce**
**que** le film décoratif (2) comprend au moins une couche réfléchissante, en particulier composée d'un métal, de préférence composée d'aluminium, d'argent, d'or, de chrome ou d'un alliage de ceux-ci, et/ou composée d'un matériau avec un indice de réfraction élevé, en particulier composé de ZnS ou Ti0₂, et/ou
**que** le film décoratif (2) présente au moins une couche fonctionnelle, en particulier une couche fonctionnelle électrique.
